# EUROPEAN PATENT SPECIFICATION

(11) **EP 4 462 926 B1**
(45) Date of publication and mention of the grant of the patent: **09.12.2026**
(21) Application number: 24174919.1
(22) Date of filing: 08.05.2024
(51) Int. Cl.: H04W 72/21, H04W 72/23, H04W 72/52

(54) **SYSTEM AND METHOD TO ADJUST PUCCH CAPACITY**
SYSTEM UND VERFAHREN ZUR ANPASSUNG DER PUCCH-KAPAZITÄT
SYSTÈME ET PROCÉDÉ POUR RÉGLER UNE CAPACITÉ PUCCH

(30) Priority: 09.05.2023 US 202363500933 P; 07.05.2024 US 202418656890
(43) Date of publication of application: 13.11.2024
(73) Proprietor: Mavenir Systems, Inc., Richardson, TX 75081 (US)
(72) Inventor: Leelahakriengkrai, Rangsan, Allen, 75013 (US); Sankaran, Manikandan, Milton, L9T5L6 (CA)
(74) Representative: dompatent

(56) References cited:
- CZERNIECKI MACIEJ ET AL: "Performance Analysis of Dynamic PUCCH Allocation Algorithm in LTE Network", INTERNATIONAL JOURNAL OF ELECTRONICS AND TELECOMMUNICATIONS, 16 January 2020 (2020-01-16), Warsaw, pages 211 - 216, XP093205358, ISSN: 2081-8491, DOI: 10.24425/ijet.2020.131865

## Description

### DESCRIPTION OF THE RELATED TECHNOLOGY

### a. Field of the Disclosure

The present disclosure relates to systems and methods for radio access networks. The present disclosure is related to the design of operation, administration and management of various network elements of 4G, 5G, and further ongoing generational mobile networks.

### a. Description of the Related Art

In cellular radio networks, the Physical Uplink Control Channel (PUCCH) contains resources for Scheduling Request (SR) and CSI (CQI, PMI, RI). These resources need to be assigned to each Radio Resource Control RRC-Connected UE. There can be 12, 18 or 36 PUCCH Format 1 per Physical Resource Block (PRB) depending on the number of cyclic shifts and orthogonal sequences used, some of which can be assigned as SR resources. Practically, 18 is used for Format 1. Each UE needs one SR resource. That is, each PRB can be assigned up to 18 different UE's. If the Base Station (BS) allocates another PRB, then the Format 1 capacity is doubled and the BS has more SR resources. Once assigned, the SR resource is repeated periodically with SR periodicity so that the UE's has the SR resource to send its scheduling request. The SR periodicity is adjustable by the BS. After the BS assigns the first 18 UE's times N PRBs then it can assign the SR resources to another group of 18 UE's times N PRBs. So the total number of UE's the BS can assign SR is 18*N*SR-periodicity. This is the SR capacity of the BS. Increasing the SR periodicity also increases the capacity. For example, if the BS assigns 1 PRB, SR periodicity is 5ms, then SR capacity is 18*1*5 = 90 UE's. If the SR periodicity is 40 ms, then SR capacity is 18*1*40 = 720 UE's.

The BS also allocates Channel State Information (CSI) to the UE using PUCCH Format 2. There can be 4, 6 or 12 CSI resources per PRB. Practically, 12 is used. Each UE needs one CSI resource to report CSI to the BS, one for each of its component carrier (CC) for its Carrier Aggregation (CA). For example, if the UE has 2 CC, it needs 2 CSI resources. If the UE does not use CA then it only needs one CSI resource. The CSI resource is repeated periodically with CSI periodicity. The CSI periodicity is adjustable by the BS and does not need to be the same as the SR periodicity. The total number of CSI resources available for the BS to assign to the UE is 12*N*CSI periodicity. Similarly, the capacity can increase by increasing the CSI periodicity. For example, if the BS assigns 1 PRB for CSI, CSI periodicity is 10ms, then CSI capacity is 12*1*10 = 120 UE's. If the CSI periodicity is 40 ms, then SR capacity is 12*1*40 = 480 UE's.

The key benefit of having smaller SR periodicity is the UE can request the BS to schedule sooner once it has bits to transmit. This reduces the UL latency.

For a CSI report, when the CSI periodicity is reduced by a smaller value of CSI periodicity, the UE can report a channel condition to the BS more often so the BS has the most accurate about the channel condition, and it can use more suitable MCS for the UE. This increases the chance of successful decoding at the UE without retransmission, hence, increasing the throughput.

The drawback of using keeping the SR and CSI periodicity low is that the SR/CSI capacity is low. That is, the BS can serve only small number of UEs. One can increase the number of PRBs for SR and/or CSI to increase the capacity but this means a smaller number of PRB for Physical Uplink Shared Channel (PUSCH) which carries user traffic.

A related-art example is the paper by Czerniecki, et. al., "Performance Analysis of Dynamic PUCCH Allocation Algorithm in LTE Network" in the International Journal of Electronics and Telecommunications, 2020, the authors proposed a scheme to increase the number of PRB to increase the PUCCH capacity while fixing the SR and CSI periodicities.

Changing the number of PUCCH PRB creates the interruption in the service for all UEs in the BS because the UEs cannot send SR or CSI feedback to the BS until the new setup is read and applied. This is done using System Information Block Type 2 (SIB2). The SIB2 is sent typically every 1.024 second. That is, the service is down for at least that amount plus processing time.

As mentioned earlier, using fixed SR and CSI periodicities can lead to high UL latency and high/inaccurate CSI feedback if the SR and CSI periodicities are set too high. If it is set too low, then the SR/CSI capacity per PRB is too low and the BS needs to increase the PUCCH PRBs to accommodate more UE's and use less PRB to transmit UL traffic. The solution of the present disclosure avoids both cases.

### OVERVIEW OF IMPLEMENTATONS

Described are implementations of a system and method to use low SR/CSI periodicity when the number of UE's is low so each UE can enjoy the low UL latency and fast CSI feedback. Then when the number of UE's is higher, the system can increase SR/CSI periodicity to increase the SR/CSI capacity. All this is done while using the fixed number of PUCCH PRB's, hence, a fixed number of PUSCH, to maintain the same BS throughput.

Aspects of the disclosure are as follows:
Described are implementations of a system and method to allocate PUCCH resources, namely, Scheduling Request and Channel State Information, to RRC-Connected UEs in the 4G and 5G radio access network (RAN). Implementations include a BS comprising a PUCCH Resource Allocator and Incoming Traffic Tracker.

The PUCCH Resource Allocator assigns SR and CSI resources and sets the SR and CSI periodicities to an arriving UE.

The Incoming-Traffic Tracker estimates the incoming traffic rate where the traffic includes call origination, handover-in, carrier aggregation carrier addition.

The PUCCH Resource Allocator uses this incoming-traffic rate and the number of existing UEs to determine if it needs to increase or decrease the SR or CSI capacity when it is in an overloaded or underloaded condition, respectively. If SR or CSI needs to be increased, the PUCCH Resource Allocator increases the SR and/or CSI periodicity. If SR or CSI needs to be decreased, the PUCCH Resource Allocator decreases the SR and/or CSI periodicity.

In an implementation, the A SR and/or CSI periodicity can be applicable to the newly arriving UEs only. The existing UEs in the cell still use the same SR and CSI resource assignment and periodicities until they depart from the eNB/gNB. This avoids sending any signaling (RRC connection reconfiguration message) to change the setting for the existing UE, which is an overhead.

If the existing UE departs from the BS (handover out to other BS or detach), this naturally frees up the SR/CSI resources and the BS can apply those to newly admitted UE's.

However, if the SR or CSI periodicity reaches the maximum and the PUCCH Resource Allocator determines that it is in an overloaded condition, the eNB/gNB can send the RRC connection reconfiguration to reallocate the existing UEs with the smallest SR or CSI periodicity to the maximum SR or CSI periodicity. This frees up more resources and increases capacity.

All of these are done using the fixed number of PUCCH PRB's.

Advantages of implementations as described herein comprise:
- Using a fixed number of PUCCH PRB's ensures that the eNB/gNB has the same number of PUSCH to serve data traffic.
- At low load, SR and CSI can be set as low as 1 ms and 2 ms, respectively. This improves the UL latency and increases CSI feedback events.
- At higher load, SR and CSI increase to accommodate more UEs.

### BRIEF DESCRIPTION OF THE DRAWINGS

FIG. 1 describes system BS comprising two modules, PUCCH Resource Allocator and Incoming-Traffic Rate Tracker
FIG. 2 describes the Admission Procedure to admit a UE and assign SR and CSI.
FIG. 3 describes the PUCCH Overload Check procedure to determine SR and CSI overload condition.
FIG. 4 describes a procedure to handle a UE deletion event.
FIG. 5 describes a PUCCH Underload Check Procedure.
FIG. 6 describes an EN-DC architecture.
FIG. 7 describes an NG-RAN architecture.
FIG. 8 is a block diagram of a system architecture.
FIG. 9 shows an example of a User Plane Stack.
FIG. 10 shows an example of a Control Plane Stack.
FIG. 11 shows an example of a Separation of CU-CP (CU-Control Plane) and CU-UP (CU-User Plane).
FIG. 12 shows another example of a Separation of CU-CP (CU-Control Plane) and CU-UP (CU-User Plane).
FIG. 13 shows a DL (Downlink) Layer 2 Structure.
FIG. 14 shows an exemplary logical flow for implementing an RB allocation policy.
FIG. 15 shows an L2 Data Flow example.
FIG. 16A shows an example of an 0-RAN architecture.
FIG. 16B shows an example of an 0-RAN architecture.
FIG. 17A illustrates a PDU Session architecture consisting of multiple DRBs.
Figure 17B illustrates a CU and DU view on PDU session, DRBs and GTP-U tunnels for a 5G network architecture.

### DETAILED DESCRIPTION OF THE IMPLEMENTATIONS

Reference is made to Third Generation Partnership Project (3GPP) and the Internet Engineering Task Force (IETF) in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP and IETF technical specifications (TS), standards (including proposed standards), technical reports (TR) and other papers define the related terms and architecture reference models that follow.
O-RAN.WG4.MP.0-R003-v13.00
3GPP TS 23.501 V 18.1.0 2023-04-05
3GPP TS 36.300 10.1.0 June 18, 2010
3GPP TS 36.300 10.1.0 Evolved Universal Terrestrial Radio Access (E-UTRA) and Evolved Universal Terrestrial Radio Access Network (E-UTRAN); Overall description; Stage 2, June 18, 2010
3GPP TS 36.300 11.1.0, December 22, 2011
3GPP TS 36.300 12.1.0, March 14, 2012
3GPP TS 36.300 13.1.0, September 24, 2015
3GPP TS 36.300 14.1.0, September 29, 2016
3GPP TS 36.300 17.4.0, March-29-2023.
3GPP TS 38.300 Group Radio Access Network; NR; NR and NG-RAN Overall Description; Stage 2, 17.3.0, January 13, 2023.
3GPP TS 38.401 V 17.4.0 2023-04-03
3GPP TS 38.501 V 18.1.0 2023-04-05
3GPP TS 38.425 17.3.0, 2023-04-03

### Acronyms

3GPP: Third generation partnership project
5GC: 5G Core Network
5G NR: 5G New Radio
5QI: 5G QoS Identifier
BS: Base Station
CA: Carrier Aggregation
CC: Component Carrier
C-RAN: cloud radio access network
CU: Central unit
CQI: Channel Quality Indicator
CSI: Channel State Information
CU-CP: Centralized Unit - Control Plane
CU-UP: Centralized Unit - User Plane
CQI: Channel Quality Indicator
DAC: Digital-to-Analog Converter
DC: Dual Connectivity
DCI: Downlink Control Information
DDDS: DL Data Delivery Status
DFE: Digital Front End
DL: Downlink
DMRS: Demodulation Reference Signal
DNN: Data Network Name
DPS: Data Plane Service
DRB: Data Radio Bearer
DU: Distribution unit
EPC: Evolved Packet Core
eNB: evolved Node B
gNB: g NodeB
EPC: Evolved Packet Core
EN-DC
E-UTRA: Evolved Universal Terrestrial Radio Access
GBR: Guaranteed Bit Rate
gNB: gNodeB (5G base station)
gRPC: next generation Remote Procedure Call
GTP-U: General Packet Radio Service (GPRS) Tunnelling Protocol - User Plane
GW: Gateway
HA: High Availability
HW: Hardware
IoT: Internet of Things
IP: Internet Protocol
IntfMgr: Interface Manager
IWF: Interworking Function
L1: Layer 1
L2: Layer 2
L3: Layer 3
L4S: Low Latency, Low Loss and Scalable Throughput
LC: Logical Channel
MAC: Medium Access Control
MCS: Modulation and Coding Scheme
MeNB : Master eNodeB
MIMO: multiple-in multiple-out
MME: Mobility Management Entity
MR-DC: Multi-Radio Dual Connectivity
M-plane: Management plane interface between SMO and O-RU
NACK: Negative Acknowledgement
NAS: Non-Access Stratum
NB: Narrowband
Near-RT RIC: Near-Real-Time RIC
NMS: Network Management System
NR: New Radio
NR-U: New Radio - User Plane
NSA: Non-Standalone Architecture
OFDM: orthogonal frequency-division multiplexing
O-RAN: Open Radio Access Network
PA: Power Amplifier
PDB: Packet Delay Budget
PDCP: Packet Data Convergence Protocol
PDU: Protocol Data Unit
PDCCH: Physical Downlink Control Channel
PDSCH: Physical Downlink Shared Channel
PHY: Physical Layer
PRB: Physical Resource Block
PRG: Physical Resource Block Group
PUCCH: Physical Uplink Control Channel
PUSCH: Physical Uplink Shared Channel
QCI: QoS Class Identifier
QFI: QoS Flow Id
QFI: QoS Flow Identifier
QoS : Quality of Service
RAT: Radio Access Technology
RB: Resource Block
RDI: Reflective QoS Flow to DRB Indication
RI: Rank Indicator
RIC: RAN Intelligent Controller
RLC: Radio Link Control
RRC: Radio Resource Control
RU: Radio Unit
SA: Standalone Architecture
SCTP: Stream Control Transmission Protocol
SDAP: Service Data Adaptation Protocol
S-GW: Serving Gateway
SIB2: System Information Block Type 2
SINR: Signal-to-Interference and Noise Ratio
SMO: Service Management and Orchestration system
SN: Signal Node
SR: Scheduling Request
SRM: Service Resource Management
SRS: Sounding Reference Signal
TCP: Transmission Control Protocol
TEID: Tunnel Endpoint Identifier
TTI: Transmission Time Interval
U-plane: User plane
UPF: User Plane Function
UE: user equipment
UL: uplink

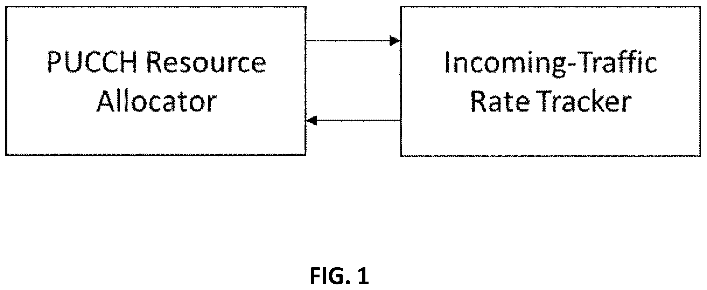

As shown in FIG. 1, in an implementation the system includes a BS comprising two modules: a PUCCH Resource Allocator and an Incoming-Traffic Rate Tracker located in the BS.

The PUCCH Resource Allocator is configured to assign SR and CSI resources to incoming UE's. The Incoming-Traffic Rate Tracker is configured to compute the number of incoming UE's rate per second. The PUCCH Resource Allocator sets the initial value of SR and CSI periodicities to the minimum values.

### Admission Procedure

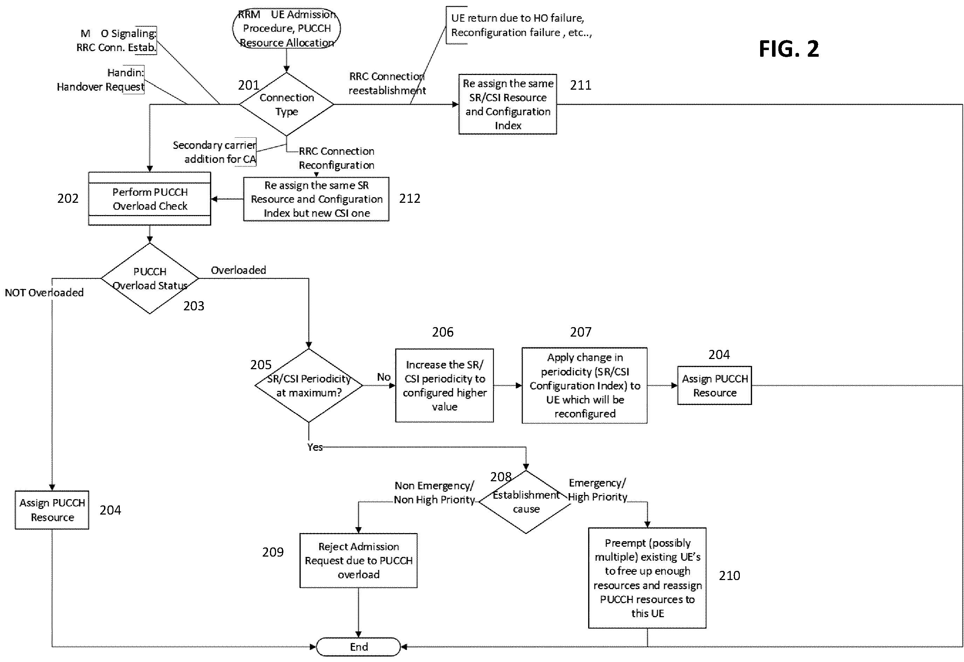

FIG. 2 shows a flow for a UE Admission procedure to admit a UE and assign SR and CSI. When there is a new UE entering the system from RRC-Idle mode to RRC-Connected mode, or when the UE is handing over from other cell (Handin), or when configuring SCell, the system follows a UE Admission procedure.

A start block starts a RMM UE Admission Procedure and PUCCH resource allocation. At block 201, the BS determines a connection type. If the connection type is a reestablishment of an RRC connection, at block 211 the BS reassigns the same SR/CSI Resource and Configuration Index, and the process is done. If the connection type is a RRC Connection and Reconfiguration for a secondary carrier for the CA, at block 212 the BS reassigns the same SR/CSI Resource and Configuration Index but assigns a new CSI.

If establishing an RRM connection, after a Handin handover request or after the secondary carrier addition at block 212, at block 202 the RRM does a PUCCH Overload Check. During the Handin, the Admission Control starts after the target BS receives Handover Request Message from the source BS. See 3GPP TS36.300 10.1 At block 203, the system then determines if the PUCCH is overloaded or not overloaded. If not overloaded, at block 204 the BS assigns a PUCCH Resource, and the process is done. If overloaded, at block 205 the BS determines if the SR/SCI periodicity is at a maximum. If not, at block 206 the BS increases the SR/CSI periodicity to a configured higher value. Then, at block 207, the BS applies the change in periodicity (SR/CSI Configuration Index) to the UE to be reconfigured. Then at block 204 the BS assigns a PUCCH Resource, and the process is done. If the SR/SCI Periodicity is at a maximum, at block 208 the system determines if the cause for the establishment of the maximum is an emergency or high priority cause or not. If the cause is a non-emergency or non-high priority cause, at block 209 the BS requests and Reject Admission Request due to PUCCH overload, and the process is ended. If the cause is an emergency or high priority, at block 210 the BS Preempts one or more existing UE s to free up enough resources and reassign PUCCH resources to this UE.

The UE only needs one SR for its lifetime in the cell. However, additional CSI resource is needed when the BS configures SCell for Carrier Aggregation (CA). That is, when the UE has no SCell (no CA), it needs one CSI resource. If it is configured the first SCell, it needs to add one more CSI resource for the total of 2. If it does 3CA having 1 PCell and 2 SCell's, then it needs 3 CSI resources, and so on. This assumes the procedure above is part of the Call Admission Control resource check procedure.

In 3GPP Release 10 for 4G LTE, PUCCH format 3 was introduced to handle carrier aggregation. See 3GPP TS 36.300 10.1.0. This can also carry SR if the UE has something to transmit. However, PUCCH Format 1 and 2 are still in use and have not changed as of the present disclosure. See 3GPP TS 36.300 17.4.0. In 3GPP Release 11 and 12, further enhancement was introduced to Format 3. 3GPP TS 36.300 11.1.0, 12.1.0. There was no change in Format 1 or 2. In 3GPP Release 13 and 14, 3GPP introduced PUCCH Formats 4 and 5 and a further improvement to Format 3 for CA support. 3GPP TS 36.300 13.1.0, 14.1.0. There was again no change in Formats 1 or 2.

### PUCCH Overload Check

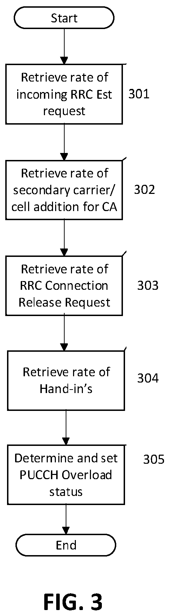

FIG. 3 illustrates a system flow for a PUCCH Overload Check procedure to determine SR and CSI overload condition. After a start block, at block 301 the RRM obtains a retrieve rate of incoming RRC establishment requests, that is, the number of RRC connection requests per second. At block 302, the RMM determines a retrieve rate of RRC connection reconfiguration requests for secondary cell addition (requests per second). At block 303, the RRM determines a retrieve rate of RRC Connection release requests (RRC connection release requests per second). At block 304, the RRC then determines the retrieve rate for Handover-Ins, that is, the number of RRC connection reconfiguration complete (Handins) per second. At block 305, the RRM determines and sets an PUCCH overload status. The PUUCH Overload Status set by the following algorithm:

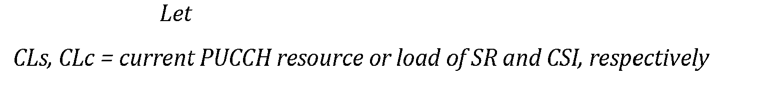

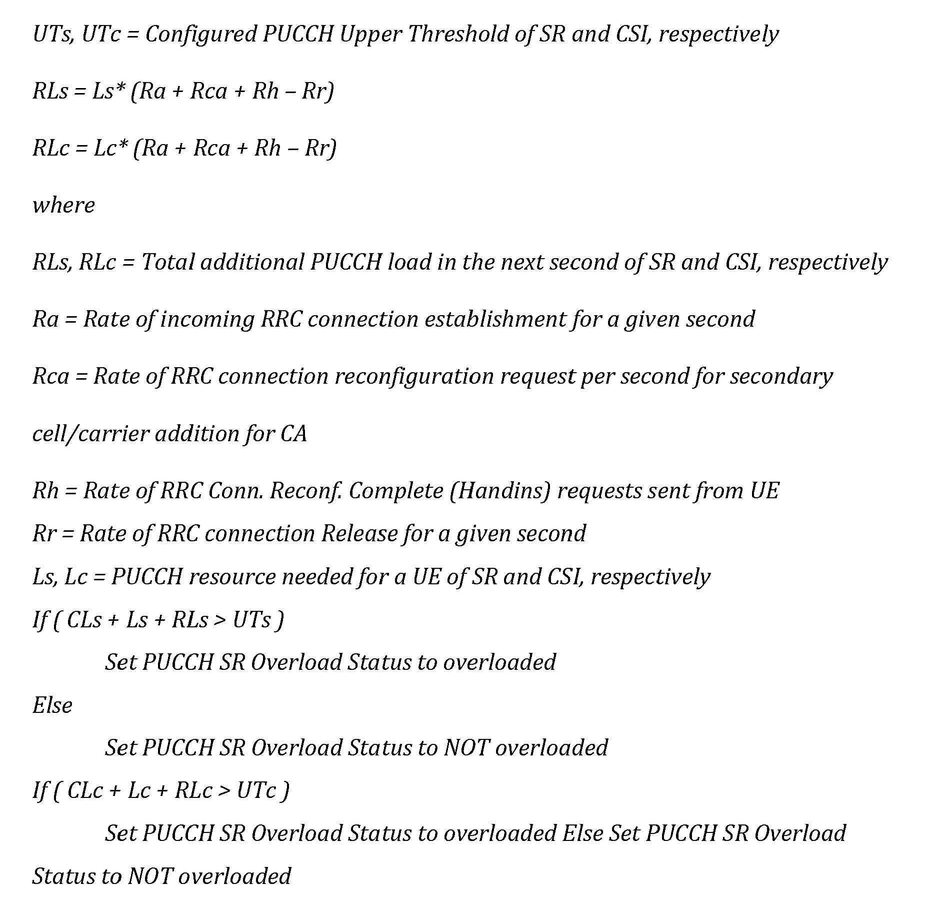

The PUCCH Overload checks also include load predictions in the next second so the eNB/gNB has enough time to relocate the PUCCH of the existing UE.

PUCCH Resource Allocator keeps track of current loads CLs and CLc and is responsible for computing PUCCH resources Ls and Lc.

The value of Ls and Lc are always 1. That is, for every new UE (attach or Handin), it starts with one SR resource and one CSI resource. The SCell is added later after the UE is established. The UE uses SR resource throughout its duration in this cell. However, when the UE is added a new SCell, no admission control is checked for SR, but a new CSI resource is needed and Lc = 1 is checked in the admission control.

As shown in the description below, after increasing the SR periodicity, the current SR resources used by current UE, CLs, double. Similarly, after increasing the CSI periodicity, the current SR resources used by current UE, CLc, double.

### SR and CSI Load Balancing

A PUCCH index assignment is assigned to a group that has the least number of assigned UEs. This is so that it will be easier for PHY layer to decode SR and CSI from a smaller number of UE per TTI, respectively.

For example, let SR periodicity is 5 ms, the UE can be assigned as shown in Table 1:

**Table 1**

| | UE ID | | | | | | | | | | | | | | | | | |
|---|---|---|---|---|---|---|---|---|---|---|---|---|---|---|---|---|---|---|
| SF id \ Resource Index | 1 | 2 | 3 | 4 | 5 | 6 | 7 | 8 | 9 | 10 | 11 | 12 | 13 | 14 | 15 | 16 | 17 | 18 |
| 1 | 1 | 6 | 11 | 16 | 21 | 26 | 31 | 36 | 41 | | | | | | | | | |
| 2 | 2 | 7 | 12 | 17 | 22 | 27 | 32 | 37 | 42 | | | | | | | | | |
| 3 | 3 | 8 | 13 | 18 | 23 | 28 | 33 | 38 | 43 | | | | | | | | | |
| 4 | 4 | 9 | 14 | 19 | 24 | 29 | 34 | 39 | 44 | | | | | | | | | |
| 5 | 5 | 10 | 15 | 20 | 25 | 30 | 35 | 40 | 45 | | | | | | | | | |

Table 1 describes an example of SR assignment with load balancing. The SF id is the sub-frame id, and the 5 groups of SR periodicity is 5 ms in the row. The column is the resource indices from 1 to 18. The item in the table header is the UE id.

### Adjusting Upper Threshold and Lower Threshold

When the algorithm increases capacity, e.g., from SR periodicity from 5 ms to 10 ms, because the current UEs do not change PUCCH locations and the algorithm does not explicitly send RRC reconfiguration to relocate the UE's, each UE effectively takes 2 spots in the new capacity. As shown in the example below:
Table 2 below is when the SR periodicity is 5ms. The bandwidth is 5 MHz. Load of each 5 ms is 0.5 (45/90). UT = 0.5. As the load >= UT, this triggers capacity increment.

**Table 2**

| SF id \ Resource Index | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| 1 | 1 | 6 | 11 | 16 | 21 | 26 | 31 | 36 | 41 | | | | | | | | | |
| 2 | 2 | 7 | 12 | 17 | 22 | 27 | 32 | 37 | 42 | | | | | | | | | |
| 3 | 3 | 8 | 13 | 18 | 23 | 28 | 33 | 38 | 43 | | | | | | | | | |
| 4 | 4 | 9 | 14 | 19 | 24 | 29 | 34 | 39 | 44 | | | | | | | | | |
| 5 | 5 | 10 | 15 | 20 | 25 | 30 | 35 | 40 | 45 | | | | | | | | | |
| 6 | 1 | 6 | 11 | 16 | 21 | 26 | 31 | 36 | 41 | | | | | | | | | |
| 7 | 2 | 7 | 12 | 17 | 22 | 27 | 32 | 37 | 42 | | | | | | | | | |
| 8 | 3 | 8 | 13 | 18 | 23 | 28 | 33 | 38 | 43 | | | | | | | | | |
| 9 | 4 | 9 | 14 | 19 | 24 | 29 | 34 | 39 | 44 | | | | | | | | | |
| 10 | 5 | 10 | 15 | 20 | 25 | 30 | 35 | 40 | 45 | | | | | | | | | |

Table 2 describes an example of the event to increase SR capacity. After the capacity expands, all the UE's still have the same SR indices and periodicity.

**Table 3**

| SF id \ Resource Index | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| 1 | 1 | 6 | 11 | 16 | 21 | 26 | 31 | 36 | 41 | | | | | | | | | |
| 2 | 2 | 7 | 12 | 17 | 22 | 27 | 32 | 37 | 42 | | | | | | | | | |
| 3 | 3 | 8 | 13 | 18 | 23 | 28 | 33 | 38 | 43 | | | | | | | | | |
| 4 | 4 | 9 | 14 | 19 | 24 | 29 | 34 | 39 | 44 | | | | | | | | | |
| 5 | 5 | 10 | 15 | 20 | 25 | 30 | 35 | 40 | 45 | | | | | | | | | |
| 6 | 1 | 6 | 11 | 16 | 21 | 26 | 31 | 36 | 41 | | | | | | | | | |
| 7 | 2 | 7 | 12 | 17 | 22 | 27 | 32 | 37 | 42 | | | | | | | | | |
| 8 | 3 | 8 | 13 | 18 | 23 | 28 | 33 | 38 | 43 | | | | | | | | | |
| 9 | 4 | 9 | 14 | 19 | 24 | 29 | 34 | 39 | 44 | | | | | | | | | |
| 10 | 5 | 10 | 15 | 20 | 25 | 30 | 35 | 40 | 45 | | | | | | | | | |

Table 3 describes an example of the SR resource allocation after SR capacity increment event.

From the SR allocation perspective, each UE takes two spots. The load in this case is still 0.5 (50%).

Therefore, the same UT cannot be used as a threshold to add to the next capacity level (in the example, it's 20 ms SR periodicity). The UT can be increased as follows:
Denote UT0, the UT at SR periodicity of 5 ms that is read from CEM.

The subsequent UT is calculated and increased based on this.

After SR/CQI increases the periodicities, the UT increases to UT+(1-UT)*UT0 in the next level.

That is, let UT(1) is the UT of SR periodicity 5 ms.$UT \left(1\right) = UT 0 \left(recommending 0.5\right) - this is SrUpperThresholdFactor .$$UT \left(2\right) = UT \left(1\right) + \left(1-UT\left(1\right)\right) * 0.5 = 0.5 + \left(1-0.5\right) * 0.5 = 0.5 + 0.25 = 0.75 .$ 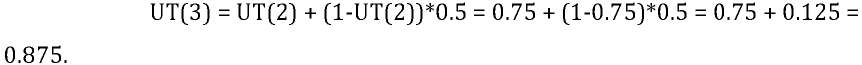 UT(3) = UT(2) + (1-UT(2))*0.5 = 0.75 + (1-0.75)*0.5 = 0.75 + 0.125 = 0.875.

For SR periodicity 1 and 2 ms, a linear process is needed as otherwise the value will be too small. Setting to a fixed UT0-0.2 and UT0-0.1, respectively:

Let UT0 (SR at 5 ms) = 0.5. The UT's at different SR periodicities are in the Table 4.

**Table 4**

| SR periodicity | 1 | 2 | 5 | 10 | 20 | 40 | 80 |
|---|---|---|---|---|---|---|---|
| Capacity | 18 | 36 | 90 | 180 | 360 | 720 | 1440 |
| UT | 0.3 | 0.4 | 0.5 | 0.75 | 0.875 | 0.9375 | 0.9688 |
| UT in num UE's | 5.4 | 14.4 | 45 | 135 | 315 | 675 | 1395 |

Table 4 describes the SR Upper Thresholds at different SR periodicities.

From the above Table 4, the algorithm increases SR periodicity from 5 ms to 10 ms at 50% load (>= 45 UE's), then from 10 to 20 ms at 75% load (>= 135 UE's), 20 to 40 ms at 87.5% load (>= 315 UE's), respectively.

The algorithm also adjusts the lower threshold LT the same way:
Denote LT0, the Lower Threshold of SR periodicity 5 ms that is read from CEM.

The LT will increase to LT+(1-LT)*LT0 in the next level.

Except for SR periodicity of 1 and 2 ms, the LT is LT0-0.1 and LT0-0.05, respectively.

Let LT0 (SR at 5 ms = 0.25. The LTs at different SR periodicity are in the Table 5.

**Table 5**

| SR periodicity | 1 | 2 | 5 | 10 | 20 | 40 | 80 |
|---|---|---|---|---|---|---|---|
| Capacity | 18 | 36 | 90 | 180 | 360 | 720 | 1440 |
| LT | 0.15 | 0.2 | 0.25 | 0.4375 | 0.5781 | 0.6836 | 0.7627 |
| LT in num UE's | 3 | 7 | 23 | 79 | 208 | 492 | 1098 |

Table 5 describes the SR Lower Thresholds at different SR periodicities. From Table 5 above, the algorithm decreases SR periodicity from 20 ms to 10 ms when the load is lower than 57.81% (< 208 UE's), from 10 to 5 ms at load lower than 43.75% (< 79 UE's), respectively.

As shown in Table 6 and Table 7, CSI periodicity Upper and Lower Thresholds are adjusted the same way. Table 6 describes the CSI Upper Thresholds at different CSI periodicities.

**Table 6**

| CSI periodicity | 2 | 5 | 10 | 20 | 40 | 80 | 160 |
|---|---|---|---|---|---|---|---|
| Capacity | 24 | 60 | 120 | 240 | 480 | 960 | 1920 |
| UT | 0.3 | 0.4 | 0.5 | 0.75 | 0.875 | 0.9375 | 0.96875 |
| UT in num UE's | 7 | 24 | 60 | 180 | 420 | 900 | 1860 |

Table 7 describes the CSI Lower Thresholds at different CSI periodicities.

**Table 7**

| CSI periodicity | 2 | 5 | 10 | 20 | 40 | 80 | 160 |
|---|---|---|---|---|---|---|---|
| Capacity | 24 | 60 | 120 | 240 | 480 | 960 | 1920 |
| LT | 0.15 | 0.2 | 0.25 | 0.4375 | 0.5781 | 0.6836 | 0.7627 |
| LT in num UE's | 4 | 12 | 30 | 105 | 278 | 656 | 1464 |

### UE Deletion

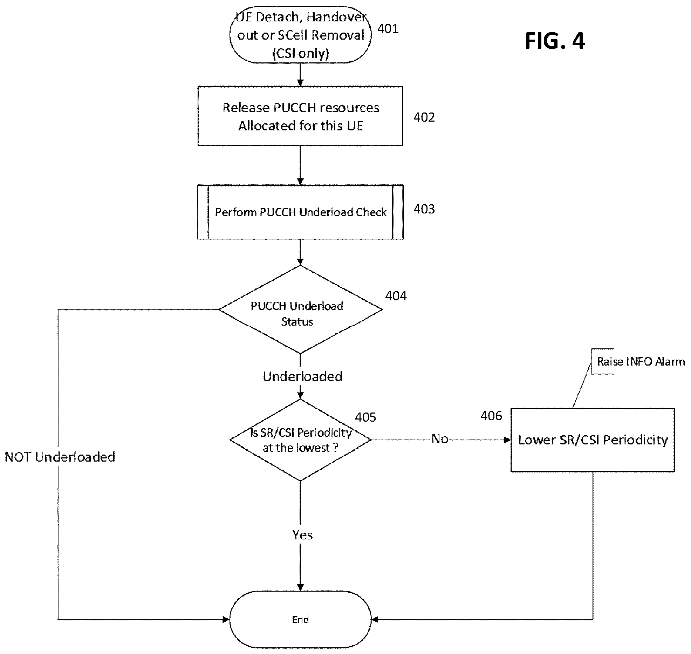

FIG. 4 describes the procedure to handle a UE deletion event. In particular, described is a UE detach, handover out or SCell Removal. As shown below, the Dynamic PUCCH will inform L3 PUCCH to release PUCCH resources for the departed UE. After a start block 401, at block 402 the BS releases PUCCH resources allocated to the UE. At block 403, the system then performs a PUCCH underload check. At block 404, the BS determines a PUCCH underload status. If the PUCCH is not underloaded, the process ends. If the PUCCH is underloaded, at block 405 the BS determines if the SR/CSI periodicity is at its lowest. If so, the process ends. If not, at block 406 the system lowers the SR/CSI periodicity accordingly, and then the process ends.

It will be noted that after the cell decreases the SR or CSI periodicity, the algorithm does not send RRC connection reconfiguration to change the SR or CSI periodicity of the existing UEs in the cell. This ensures there is no extra overhead from this algorithm. Furthermore, the new SR or CSI periodicity is applied to a new UE.

### PUCCH Underload Check

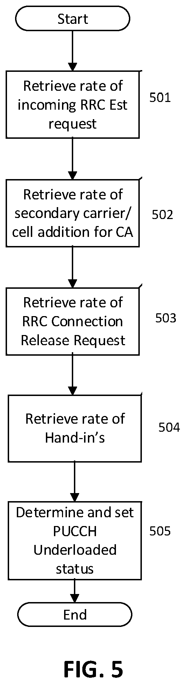

Figure 5 shows a call flow described as the PUCCH Underload condition check. After a start block, at block 501 the RRM obtains a retrieve rate of incoming RRC establishment requests, that is, the number of RRC connection request per second. At block 502, the BS determines a retrieve rate of RRC connection reconfiguration requests for secondary cell addition (requests per second). At block 503, the BS determines a retrieve rate of RRC Connection release requests (RRC connection release requests per second). At block 504, the BS then determines the retrieve rate for Handover-Ins, that is, the number of RRC connection reconfiguration complete (Handins) per second. At block 505, the BS determines and sets a PUCCH underload status. The PUUCH underload status is set by the following algorithm:

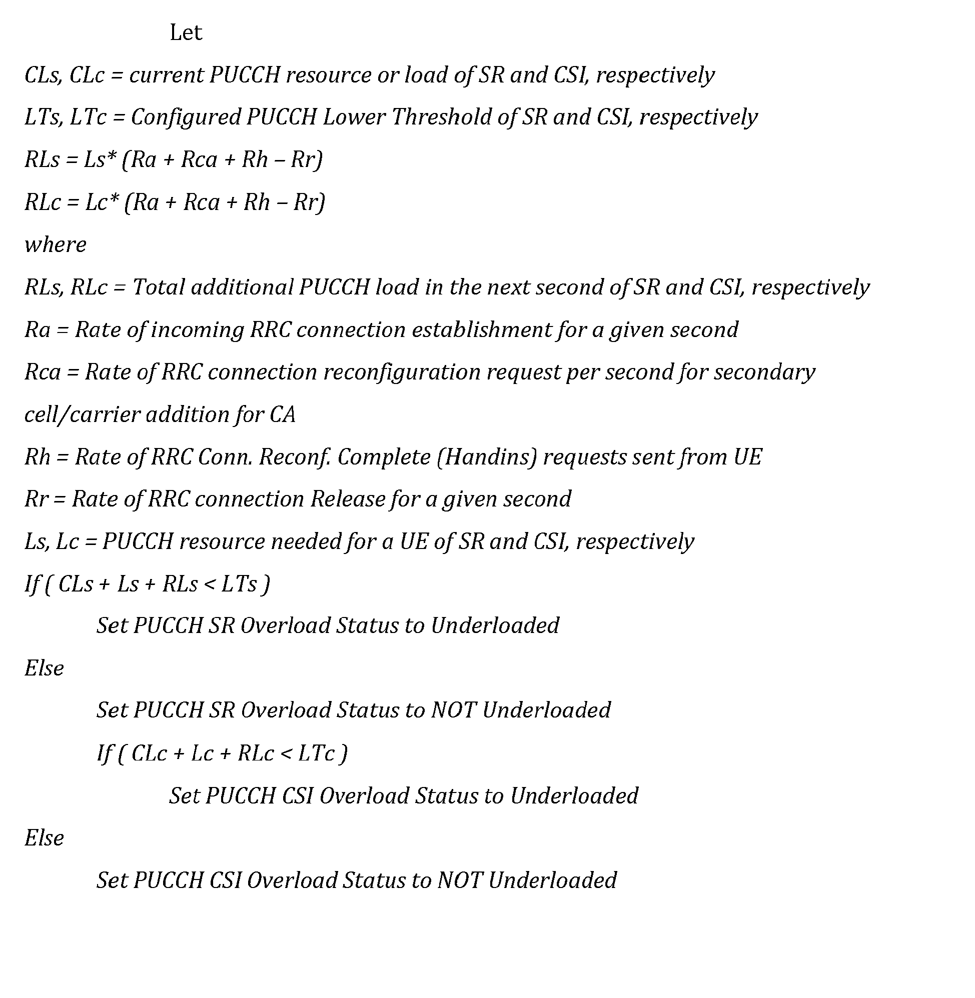

### Current PUCCH Resources CLs and CLc after decreasing SR/CQI Periodicity

After decreasing SR Periodicity, the CLs are cut in half as shown in herein. Similarly, in decreasing CSI Periodicity, the CLc shall be cut in half.

### Sending RRC Reconfiguration to set SR/CRI periodicity

An RRC reconfiguration can be sent to all UEs when the SR/CRI periodicity increases or decreases to relocate the PUCCH resources of those UE's. However, this imposes huge load to system and can skew the KPI.

Therefore, the system can be configured so that the algorithm will not send RRC Reconfiguration to all UE's. RRC Reconfiguration can be sent to the specific UE to relocate its PUCCH resource whenever the BS needs to send an RRC Reconfiguration for other reason, such as when the UE moves from Idle to connected mode, hand-in, secondary cell configuration or reconfiguration.

In another embodiment, when PUCCH Status is overloaded and SR is at the maximum periodicity, then the BS can send the RRC reconfiguration to the UE's that have been assigned the smaller SR periodicity than the current one to set theirs to the current value. The BS can start with the UEs with the smallest SR periodicity and work its way up. The same method can be applied to CSI.

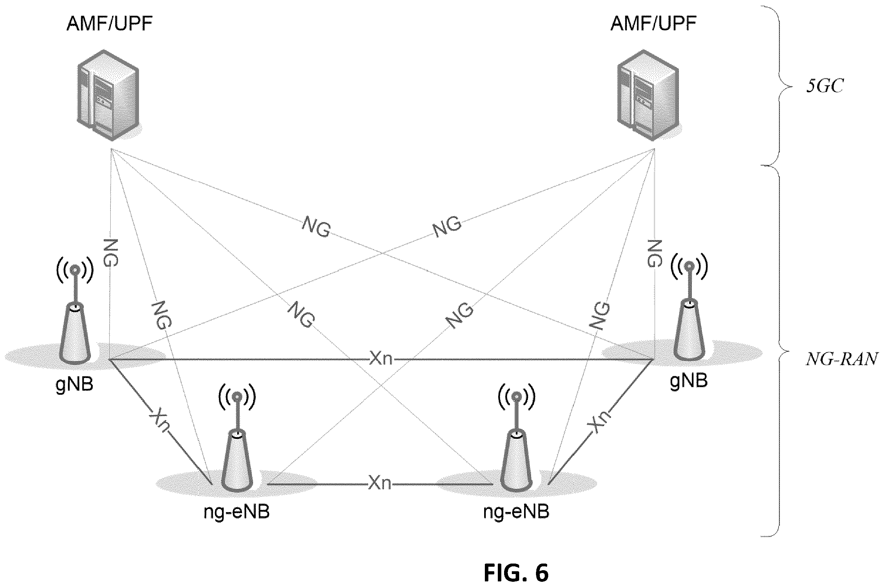

An E-UTRAN architecture is illustrated in FIG. 6. The E-UTRAN comprises of eNBs, providing the E-UTRA U-plane (PD CP/RLC/MAC/PHY) and control plane (RRC) protocol terminations towards the UE. The eNBs are interconnected with each other by means of the X2 interface. The eNBs are also connected by means of the S1 interface to the EPC (Evolved Packet Core), more specifically to the MME (Mobility Management Entity) by means of the S1-MME interface and to the Serving Gateway (S-GW) by means of the S1-U interface. The S1 interface supports a many-to-many relation between MMEs / Serving Gateways and eNBs.

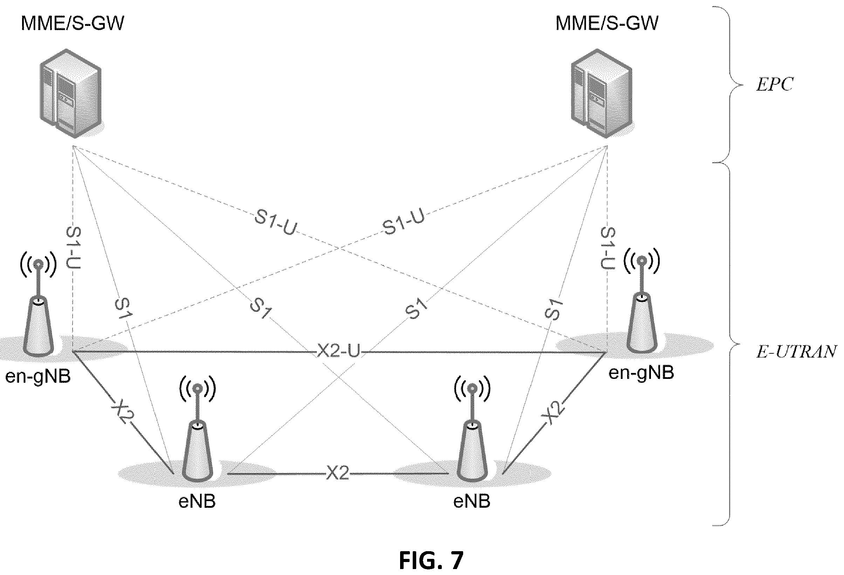

E-UTRAN also supports MR-DC via E-UTRA-NR Dual Connectivity (EN-DC), in which a UE is connected to one eNB that acts as a MN and one en-gNB that acts as a SN. An EN-DC architecture is illustrated in FIG. 7. The eNB is connected to the EPC via the S1 interface and to the en-gNB via the X2 interface. The en-gNB might also be connected to the EPC via the S1-U interface and other en-gNBs via the X2-U interface. In EN-DC, and en-gNB comprises gNB-CU and gNB-DU(s).

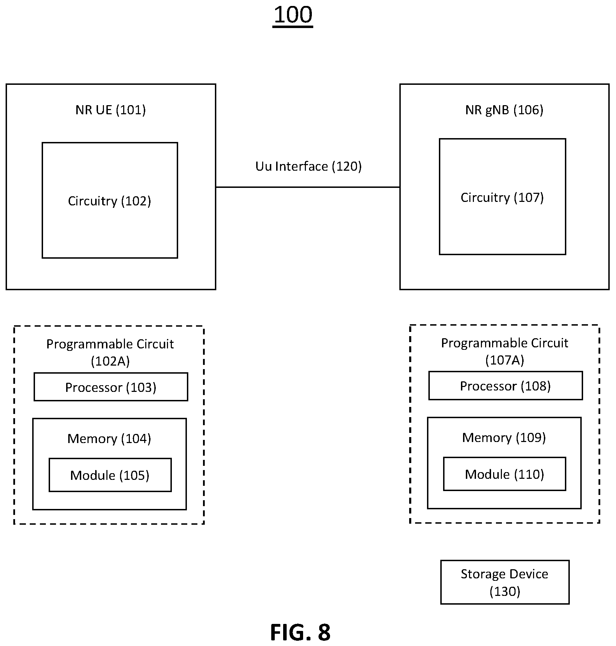

E-UTRAN also supports and NG-RAN architecture. An NG-RAN architecture is illustrated in FIG. 8. An NG-RAN node is either:
a gNB, providing NR user plane and control plane protocol terminations towards the UE; or
an ng-eNB, providing E-UTRA user plane and control plane protocol terminations towards the UE. (3GPP TS 38.300 17.3.0.)

As shown in FIGS. 6-7, the gNBs and ng-eNBs are interconnected with each other by means of the Xn interface. The gNBs and ng-eNBs are also connected by means of the NG interfaces to the 5GC, more specifically to the AMF (Access and Mobility Management Function) by means of the NG-C interface and to the UPF (User Plane Function) by means of the NG-U interface. The gNB and ng-eNB host functions for Radio Resource Management such as: Radio Bearer Control, Radio Admission Control, Connection Mobility Control, Dynamic allocation of resources to UEs in both uplink and downlink (scheduling), connection setup and release; session Management; QoS Flow management and mapping to data radio bearers; Dual Connectivity. Tight interworking between NR and E-UTRA. NB-IoT UE is supported by ng-eNB.

FIG. 8 is a block diagram of a system 100. System 100 includes a NR UE 101, a NR gNB 106. The NR UE and NR gNB are communicatively coupled via a Uu interface 120.

NR UE 101 includes electronic circuitry, namely circuitry 102, that performs operations on behalf of NR UE 101 to execute methods described herein. Circuity 102 can be implemented with any or all of (a) discrete electronic components, (b) firmware, and (c) a programmable circuit 102A.

NR gNB 106 includes electronic circuitry, namely circuitry 107, that performs operations on behalf of NR gNB 106 to execute methods described herein. Circuity 107 can be implemented with any or all of (a) discrete electronic components, (b) firmware, and (c) a programmable circuit 107A.

Programmable circuit 107A, which is an implementation of circuitry 107, includes a processor 108 and a memory 109. Processor 108 is an electronic device configured of logic circuitry that responds to and executes instructions. Memory 109 is a tangible, non-transitory, computer-readable storage device encoded with a computer program. In this regard, memory 109 stores data and instructions, i.e., program code, that are readable and executable by processor 108 for controlling operations of processor 108. Memory 109 can be implemented in a random-access memory (RAM), a hard drive, a read only memory (ROM), or a combination thereof. One of the components of memory 109 is a program module, namely module 110. Module 110 contains instructions for controlling processor 108 to execute operations described herein on behalf of NR gNB 106.

The term "module" is used herein to denote a functional operation that can be embodied either as a stand-alone component or as an integrated configuration of a plurality of subordinate components. Thus, each of module 105 and 110 can be implemented as a single module or as a plurality of modules that operate in cooperation with one another.

While modules 110 are indicated as being already loaded into memories 109, and module 110 can be configured on a storage device 130 for subsequent loading into their memories 109. Storage device 130 is a tangible, non-transitory, computer-readable storage device that stores module 110 thereon. Examples of storage device 130 include (a) a compact disk, (b) a magnetic tape, (c) a read only memory, (d) an optical storage medium, (e) a hard drive, (f) a memory unit consisting of multiple parallel hard drives, (g) a universal serial bus (USB) flash drive, (h) a random-access memory, and (i) an electronic storage device coupled to NR gNB 106 via a data communications network.

Uu Interface (120) is the radio link between the NR UE and NR gNB, which is compliant to the 5G NR specification.

UEs 101 can be dispersed throughout wireless communication network, and each UE can be stationary or mobile. A UE includes: an access terminal, a terminal, a mobile station, a subscriber unit, a station, etc. A UE can also include be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a drone, a robot/robotic device, a netbook, a smartbook, an ultrabook, a medical device, medical equipment, a healthcare device, a biometric sensor/device, a wearable device such as a smart watch, smart clothing, smart glasses, a smart wristband, and/or smart jewelry (e.g., a smart ring, a smart bracelet, etc.), an entertainment device (e.g., a music device, a video device, a satellite radio, etc.), industrial manufacturing equipment, a global positioning system (GPS) device, or any other suitable device configured to communicate via a wireless or wired medium. UEs can include UEs considered as machine-type communication (MTC) UEs or enhanced/evolved MTC (eMTC) UEs. MTC/eMTC UEs that can be implemented as IoT UEs. IoT UEs include, for example, robots/robotic devices, drones, remote devices, sensors, meters, monitors, cameras, location tags, etc., that can communicate with a BS, another device (e.g., remote device), or some other entity. A wireless node can provide, for example, connectivity for or to a network (e.g., a wide area network such as Internet or a cellular network) via a wired or wireless communication link.

One or more UEs 101 in the wireless communication network (e.g., an LTE network) can be a narrowband bandwidth UE. As used herein, devices with limited communication resources, e.g. smaller bandwidth, are considered as narrowband UEs. Similarly, legacy devices, such as legacy and/or advanced UEs (e.g., in LTE) can be considered as wideband UEs. Wideband UEs are generally understood as devices that use greater amounts of bandwidth than narrowband UEs.

The RAN can include one or more AN nodes or RAN nodes. These access nodes can be referred to as BS, gNBs, RAN nodes, eNBs, NodeBs, RSUs, MF-APs, TRxPs or TRPs, and so forth, and comprise ground stations (e.g., terrestrial access points) or satellite stations providing coverage within a geographic area (e.g., a cell). The term "NG RAN node" or the like refers to a RAN node that operates in an NR or 5G system (e.g., a gNB), and the term "E-UTRAN node" or the like refers to a RAN node that operates in an LTE or 4G system (e.g., an eNB). According to various embodiments, the RAN nodes can be implemented as one or more of a dedicated physical device such as a macrocell base station, and/or a low power base station for providing femtocells, picocells or other like cells having smaller coverage areas, smaller user capacity, or higher bandwidth compared to macrocells.

In some embodiments, all or parts of the RAN nodes can be implemented as one or more software entities running on server computers as part of a virtual network, which can be referred to as a CRAN and/or a vBBU. In these embodiments, the CRAN or vBBU can implement a RAN function split, such as a PDCP split wherein RRC and PDCP layers are operated by the CRAN/vBBU and other L2 protocol entities are operated by individual RAN nodes; a MAC/PHY split wherein RRC, PDCP, RLC, and MAC layers are operated by the CRAN/vBBU and the PHY layer is operated by individual RAN nodes; or a "lower PHY" split wherein RRC, PDCP, RLC, MAC layers and upper portions of the PHY layer are operated by the CRAN/vBBU and lower portions of the PHY layer are operated by individual RAN nodes. This virtualized framework allows the freed-up processor cores of the RAN nodes to perform other virtualized applications. In some implementations, an individual RAN node can represent individual gNB-DUs that are connected to a gNB-CU 151via individual F1 interfaces. In these implementations, the gNB-DUs can include one or more remote radio heads (RRH), and the gNB-CU 151can be operated by a server that is located in the RAN or by a server pool in a similar manner as the CRAN/vBBU. One or more of the RAN nodes can be next generation eNBs (ng-eNBs), which are RAN nodes that provide E-UTRA user plane and control plane protocol terminations toward the UEs 101, and are connected to a 5GC via an NG interface. In MF implementations, the MF-APs are entities that provide MultiFire radio services, and can be similar to eNBs in an 3GPP architecture.

In some implementations, access to a wireless interface can be scheduled, wherein a scheduling entity (e.g.: BS, gNB, etc.) allocates bandwidth resources for devices and equipment within its service area or cell. As scheduling entity can be configured to schedule, assign, reconfigure, and release resources for one or more subordinate entities. In some examples, a UE 101 (or other device) can function as master node scheduling entity, scheduling resources for one or more secondary node subordinate entities (e.g., one or more other UEs 101). Thus, in a wireless communication network with a scheduled access to time-frequency resources and having a cellular configuration, a P2P configuration, and a mesh configuration, a scheduling entity and one or more subordinate entities can communicate utilizing the scheduled resources.

BS or gNB 106 can be equipped with T antennas and UE 101 can be equipped with R antennas, where in general T≥1 and R≥1. At BS, a transmit processor is configured to receive data from a data source for one or more UEs 101 and select one or more modulation and coding schemes (MCS) for each UE based on channel quality indicators (CQIs) received from the UE 101. The BS is configured to process (e.g., encode and modulate) the data for each UE 101 based on the MCS(s) selected for the UE 101, and provide data symbols for all UEs. A transmit processor is also configured to process system information (e.g., for static resource partitioning information (SRPI), etc.) and control information (e.g., CQI requests, grants, upper layer signaling, etc.) and can provide overhead symbols and control symbols. Processor 108 can also generate reference symbols for reference signals (e.g., the cell-specific reference signal (CRS)) and synchronization signals (e.g., the primary synchronization signal (PSS) and the secondary synchronization signal (SSS)). A transmit (TX) multiple-input multiple-output (MIMO) processor can be configured perform spatial processing (e.g., precoding) on the data symbols, the control symbols, the overhead symbols, and/or the reference symbols, if applicable, and can be configured to provide T output symbol streams to T modulators (MODs). Each modulator can be configured to process a respective output symbol stream (e.g., for OFDM, etc.) to obtain an output sample stream. Each modulator can further be configured to process (e.g., convert to analog, amplify, filter, and upconvert) the output sample stream to obtain a downlink signal. T downlink signals from modulators can be transmitted via T antennas.

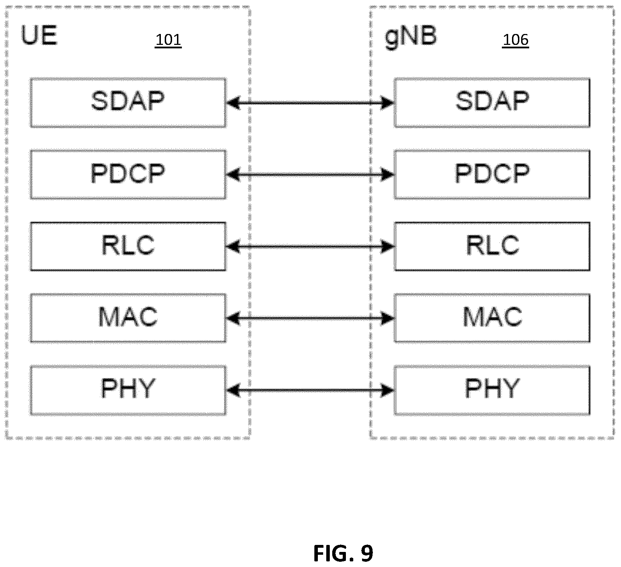

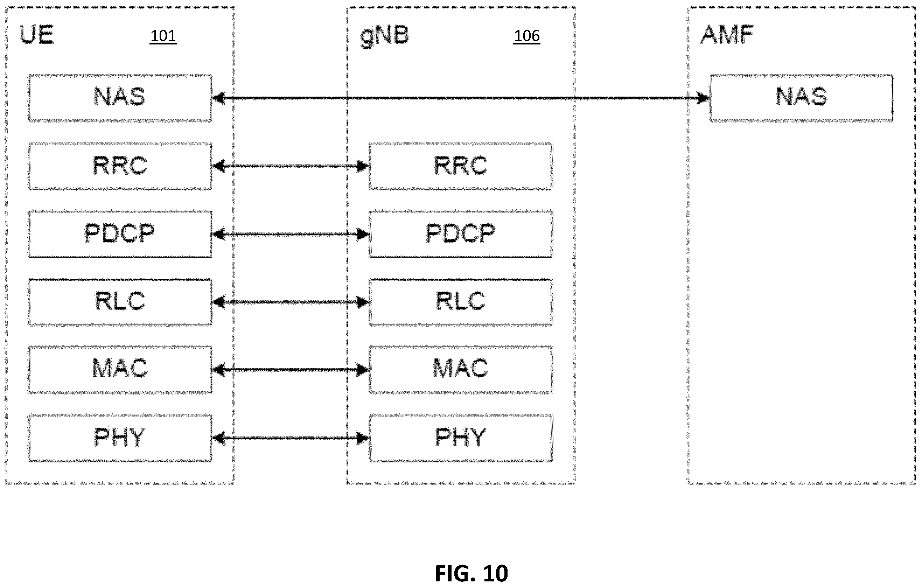

An overview of 5G NR Stacks is as follows. 5G NR (New Radio) user and control plane functions with monolithic gNB 106 are shown in FIG. 9 and FIG. 10. For the user plane, PHY (physical), MAC (Medium Access Control), RLC (Radio Link Control), PDCP (Packet Data Convergence Protocol) and SDAP (Service Data Adaptation Protocol) sublayers are terminated in the gNB 106 on the network side. For the control plane, RRC (Radio Resource Control), PDCP, RLC, MAC and PHY sublayers are terminated in the gNB 106 on the network side and NAS (Non-Access Stratum) is terminated in the AMF (Access Mobility Function) on the network side. FIG. 9 shows an example of a User Plane Stack as descried in 3GPP TS 38.300. FIG. 10 shows an example of a Control Plane Stack as described in 3GPP TS 38.300.

An NG-RAN (NG-Radio Access Network) architecture from 3GPP TS 38.401 is described below. F1 is the interface between gNB-CU 151 (gNB - Centralized Unit) and gNB-DU 152 (gNB - Distributed Unit), NG is the interface between gNB-CU 151 (or gNB) and 5GC (5G Core), E1 is the interface between CU-CP (CU-Control Plane) and CU-UP (CU-User Plane), and Xn is interface between gNBs.

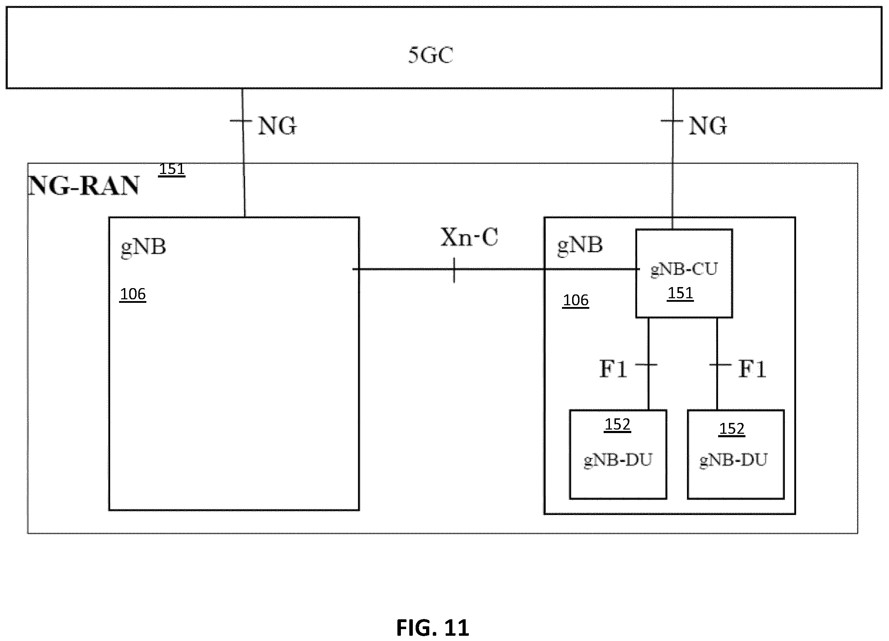

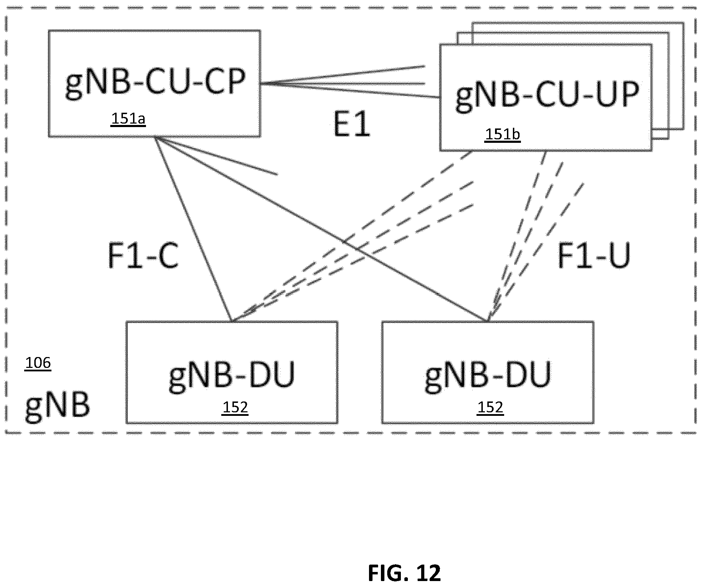

A gNB 106 can consist of a gNB-CU-CP, multiple gNB-CU-UPs and multiple gNB-DUs. The gNB-CU-CP is connected to the gNB-DU 152 through the F1-C interface and to the gNB-CU-UP through the E1 interface. The gNB-CU-UP is connected to the gNB-DU 152 through the F1-U interface and to the gNB-CU-CP through the E1 interface. One gNB-DU 152 is connected to only one gNB-CU-CP 151a and one gNB-CU-UP 151b is connected to only one gNB-CU-CP. FIG. 11 shows an example of an NG-RAN Architecture as described in 3GPP TS 38.501. FIG. 12 shows an example of a Separation of CU-CP 151a (CU-Control Plane) 151a CU-UP 151b (CU-User Plane) as described in 3GPP TS 38.401.

A Layer 2 (L2) of 5G NR is split into the following sublayers is described in 3GPP TS 38.300):
Medium Access Control (MAC): The MAC sublayer offers Logical Channels (LCs) to the RLC sublayer. This layer runs a MAC scheduler to schedule radio resources across different LCs (and their associated radio bearers).

Radio Link Control (RLC): The RLC sublayer offers RLC channels to the PDCP sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts ARQ (Automatic Repeat Request) protocol for RLC-AM mode.

Packet Data Convergence Protocol (PDCP): The PDCP sublayer offers Radio Bearers (RBs) to the SDAP sublayer. There are two types of Radio Bearers: Data Radio Bearers (DRBs) for data and Signaling Radio Bearers (SRBs) for control plane.

Service Data Adaptation Protocol (SDAP): The SDAP offers QoS Flows to the 5GC (5G Core). This sublayer provides mapping between a QoS flow and a DRB. It marks QoS Flow Id in DL (downlink) as well as UL (uplink packets).

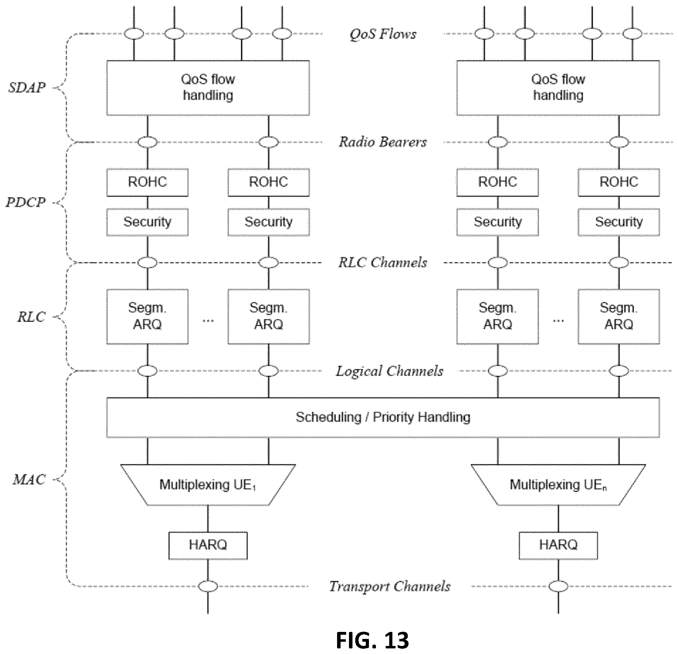

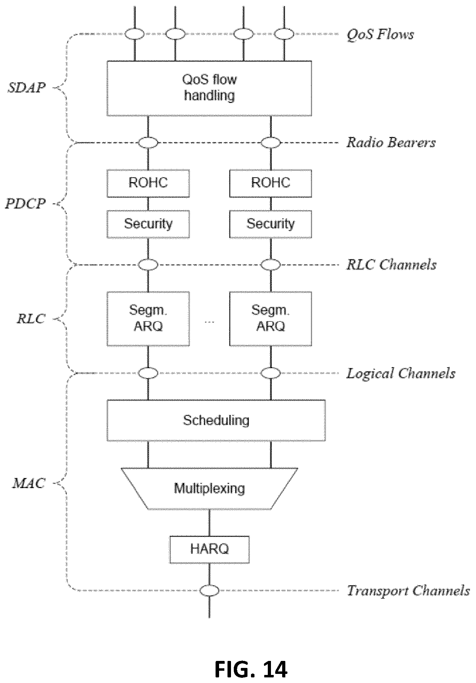

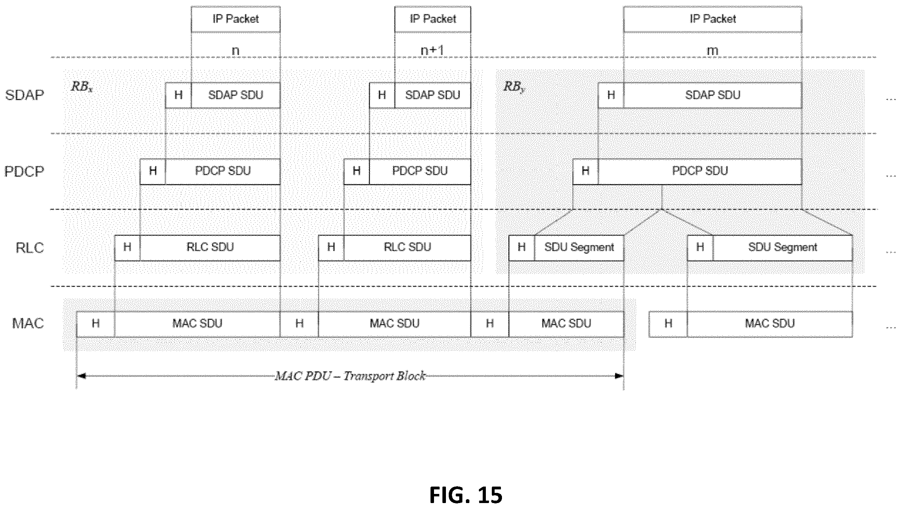

FIG. 13 shows a DL (Downlink) Layer 2 Structure as described in 3GPP TS 38.300. FIG. 14 shows an UL (uplink) Layer 2 Structure in accord with 3GPP TS38.300. FIG. 15 shows an L2 Data Flow example in accord with 3GPP TS 38.300 ([H] denotes headers or subheaders in FIG. 15).

O-RAN, which is based on disaggregated components and connected through open and standardized interfaces is based on 3GPP NG-RAN. An overview of O-RAN with disaggregated RAN (CU, DU, and RU), near-real-time RIC 160 and non-real-time RIC is shown in the figure below. Here, DU (Distributed Unit) and CU (Centralized Unit) are typically implemented using COTS (Commercial off-the-shelf) hardware.

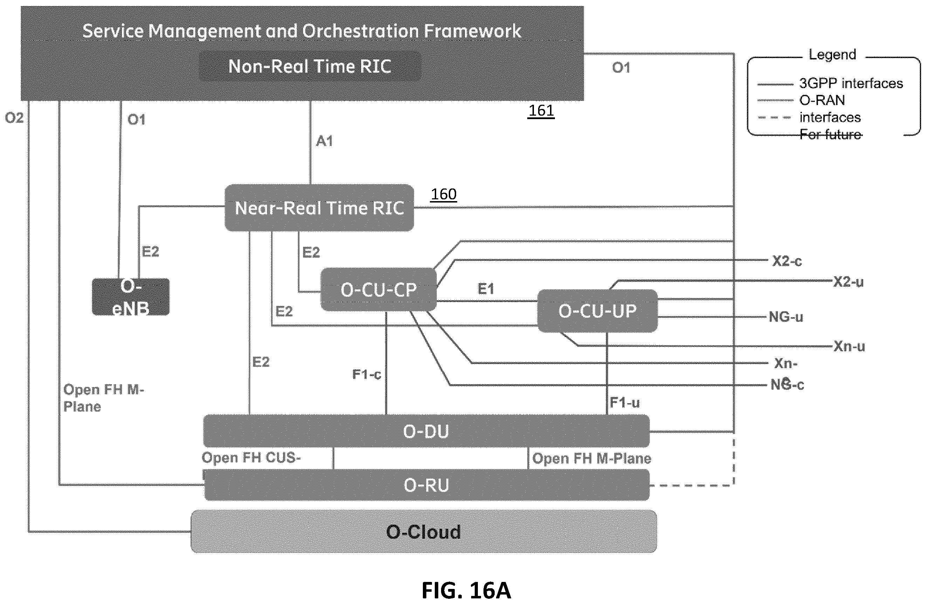

FIGS. 16A-16B show an example of an O-RAN architecture. In FIG. 16A, the CU and the DU are connected using the F1 interface (with F1-C for control plane and F1-U for user plane traffic) over the midhaul (MH) path. One DU could host multiple cells (for example, one DU could host 24 cells) and each cell can support many users. For example, one cell can support 600 RRC Connected users and out of these 600, there can be 200 Active users (i.e.; users which have data to send at a given point of time).

A cell site could consist of multiple sectors and each sector can support multiple cells. For example, one site could consist of three sectors and each sector could support 8 cells (with 8 cells in each sector on different frequency bands). One CU-CP could support multiple DUs and thus multiple cells. For example, a CU-CP could support 1000 cells and around 100,000 UEs. Each UE could support multiple DRBs and there could be multiple instances of CU-UP to serve these DRBs. For example, each UE could support 4 DRBs, and 400,000 DRBs (corresponding to 100,000 UEs) can be served by five CU-UP instances (and one CU-CP instance).

DU can be located in a private data center or it could be located at a cell-site too. CU can also be located in a private data center or even hosted on a public cloud system. DU and CU can be tens of kilometers away. CU can communicate with 5G core system which could also be hosted in the same public cloud system (or could be hosted by a different cloud provider). RU (Radio Unit) is located at cell-site and communicated with DU via a fronthaul (FH) interface.

The E2 nodes (CU and DU) are connected to the near-real-time RIC 160 using the E2 interface. The E2 interface is used to send data (e.g., user, cell, slice KPMs) from the RAN, and deploy control actions and policies to the RAN at near-real-time RIC 160. The application or service at the near-real-time RIC 160 that deploys the control actions and policies to the RAN are called xApps. The near-real-time RIC 160 is connected to the non-real-time RIC 161 using the A1 interface.

SMO manages multiple regional networks, and O-RAN NFs (O-CUs, Near-RT RIC 160, O-DUs) can be deployed in a regional data center which is connected to multiple cell sites or in cell site which is close to localized O-RU according to network requirements. Since SMO Functions and O-RAN NFs are micro services and deployment-independent logical functions, SMO Functions and O-RAN NFs can be composed of multiple deployment instances deployed in the same O-Cloud or in a different O-Cloud in regional data center, or in cell site according to network requirements (ex. capacity, latency, security, and so on) if the secure connection among SMO Functions and O-RAN NFs are available.

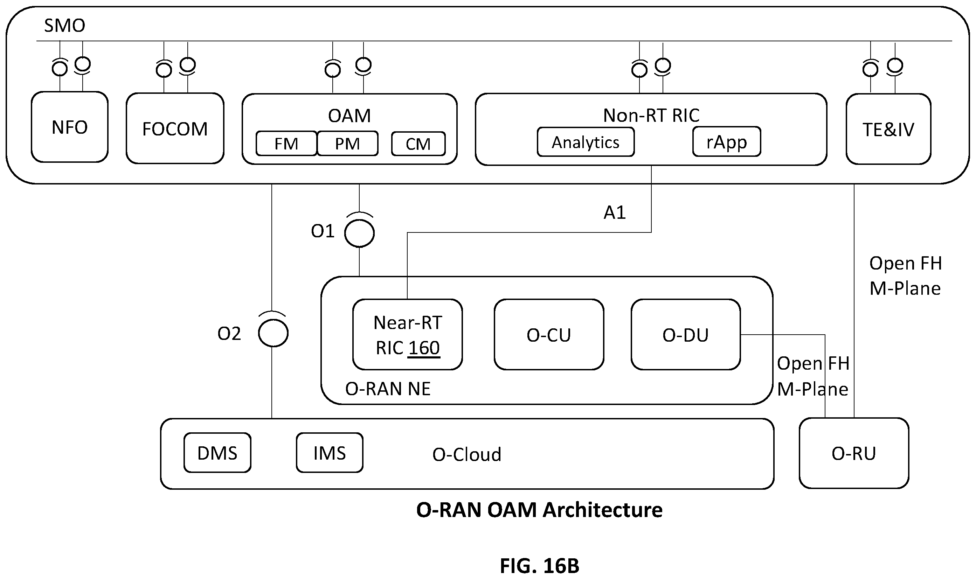

As shown in FIG. 16B, an O-RAN compliant SMO defines TE&IV, RAN NF OAM, Non-RT RIC, and NFO, FOCOM services. SMO interacts with O-RAN NFs with O1 interface. SMO interacts with O-RU with Open FH M-Plane interface and interacts O-Cloud via the O2 interface. O-RAN NF OAM manages O-RAN NF CM, FM, PM and creates O-RAN NF inventory and topology in TE&IV. FOCOM/NFO manages O-Cloud resources and creates O-Cloud resources inventory and topology in TE&IV. Analytics/rApp in Non-RT RIC can subscribe O-RAN NFs PM/FM, O-Cloud PM/FM data based on O-RAN NF OAM and FOCOM/NFO. Analytics/rApp in Non-RT RIC can retrieve the O-RAN NF and O-Cloud resource inventory and topology.

### PDU Sessions, DRBs, QoS Flows

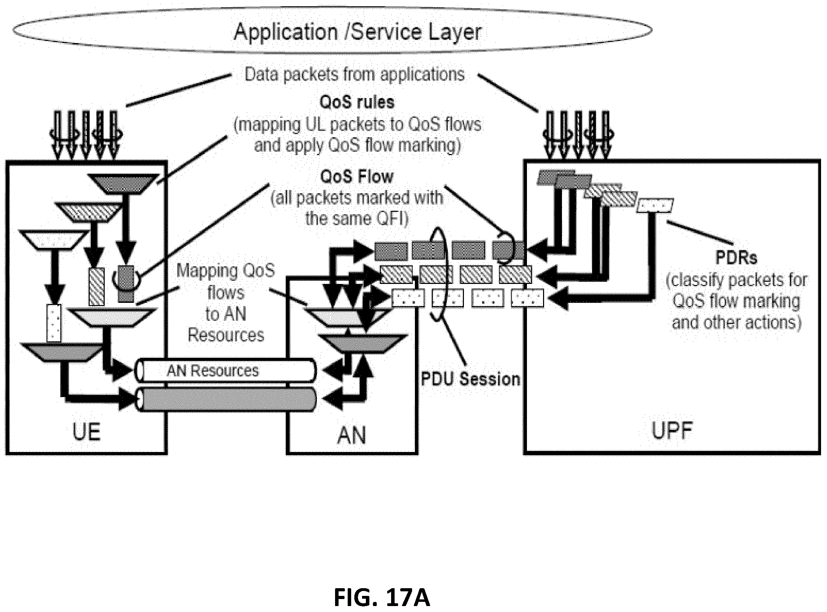

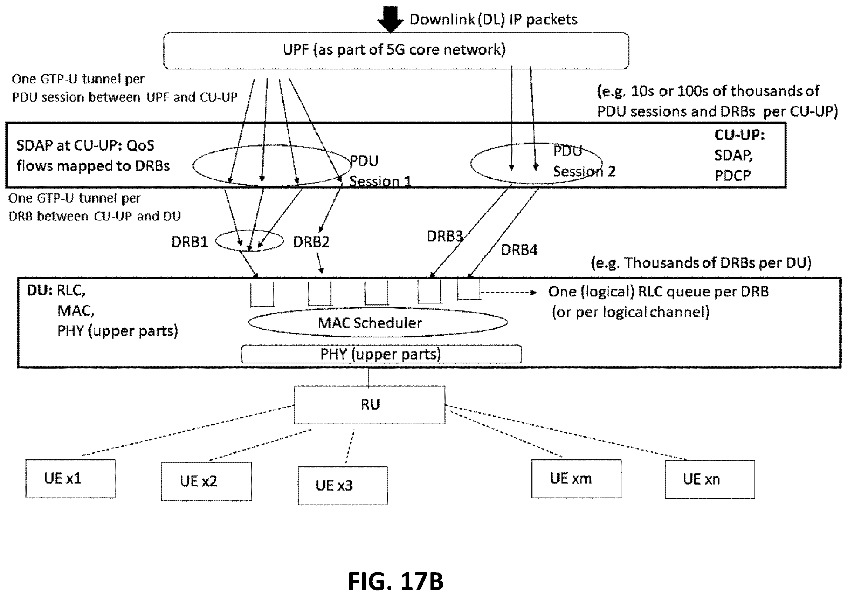

In 5G networks, PDU connectivity service is a service that provides exchange of PDUs between a UE and a data network identified by a Data Network Name (DNN). The PDU Connectivity service is supported via PDU sessions that are established upon request from the UE. This DNN defines the interface to a specific external data network. One or more QoS flows can be supported in a PDU session. All the packets belonging to a specific QoS flow have the same 5QI (5G QoS Identifier). FIG. 17A illustrates a PDU Session architecture consisting of multiple DRBs. Each DRB can consist of multiple QoS flows (3GPP TS 23.501). FIG. 17B illustrates a CU and DU view on PDU session, DRBs and GTP-U tunnels for a 5G network architecture.

As shown in FIGS. 17A-17B, a PDU session comprises the following:
A Data Radio Bearer (DRB) is between UE and CU in RAN and a NG-U GTP tunnel which is between CU and UPF (User Plane Function) in the core network. For the 3GPP's 5G network architecture, the transport connection between the base station (i.e., CU-UP) and User Plane Function (UPF) uses a single GTP-U tunnel per PDU session. The PDU session is identified using GTP-U TEID (Tunnel Endpoint Identifier). The transport connection between DU and CU-UP uses a single GTP-U tunnel per DRB.

### SDAP

The SDAP (Service Adaptation Protocol) Layer receives downlink data from the UPF across the NG-U interface. It maps one or more QoS Flow(s) onto a specific DRB. The SDAP header is present between the UE and the CU (when reflective QoS is enabled), and includes a field to identify the QoS flow within a specific PDU session. GTP-U user plane protocol includes a field to identify the QoS flow and is present between CU and UPF (in the core network).

### Flow Control between CU-UP and DU

Procedures and functionality of the F1-U interface are defined in 3GPP TS 38.425. This F1-U interface supports NR User Plane (NR-U ) protocol which provides support for flow control and reliability between CU-UP and DU for each DRB. Figure 9B shows DL Data, and Flow Control Feedback (DDDS) in 5G Networks. Downlink User Data (DUD) PDUs are used to carry PDCP PDUs from CU-UP to DU for each DRB. The Downlink Data Delivery Status (DDDS) message conveys Desired Buffer Size (DBS), Desired Data Rate (DDR) and some other parameters from DU to CU-UP for each DRB as part of flow control feedback.

If value of the DBS is zero for a DRB, the NR PDCP hosting node (i.e., the CU-UP here) stops sending data for that DRB from the CU-UP 151b to the DU 152. If value of the DBS is greater than zero, the NR PDCP hosting node (i.e., CU-UP 151b) can send up to this amount of data for that DRB. The value of DDR is the amount of data desired to be received every second by the DU (from CU-UP) for that DRB. The corresponding node (i.e., DU) can also transfer uplink data from the DU to the CU-UP for the concerned DRB along with the DDDS frame in the same GTP-U tunnel. Transfer of (Radio) Assistance Information (TAI) PDU from DU to CU-UP is also supported.

It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process such that the instructions, which execute on the processor to provide steps for implementing the actions specified. Moreover, some of the steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope of the disclosure.

## Claims

1. : A system comprising:
a Base Station, BS, comprising
an Incoming-Traffic Tracker configured to calculate an incoming traffic rate of incoming UEs entering a cell;
a Physical Uplink Control Channel, PUCCH, Resource Allocator configured to allocate PUCCH resources including a fixed number of PUCCH Physical Resource Blocks, PRBs, to an Radio Resource Control, RRC, connected UE in a radio access network, wherein the PUCCH resources comprise a Scheduling Request, SR, and Channel State Information, CSI, and wherein the PUCCH Resource Allocator is configured to assign the SR and the CSI to the incoming UEs and set the SR and the CSI periodicities for the incoming UEs,
wherein the BS is configured to use the incoming-traffic rate and a number of existing UEs already in the cell to determine if the PUCCH Resource Allocator needs to increase an SR or CSI capacity when it is in an overloaded condition or decrease the SR or CSI capacity or both when it is in an underloaded condition; and the PUCCH Resource Allocator is further configured to:
when an increase is needed, increase the the SR or CSI periodicity or both; and
when a decrease is needed, decrease the the SR or CSI periodicity or both.

2. . The system of claim 1, wherein, the BS is configured to:
determine a connection type, and
when the connection type is a reestablishment of an RRC connection, reassign a same SR and CSI Resource and Configuration Index; or
when the connection type is a RRC Connection and Reconfiguration for a secondary carrier, reassign a same SR CSI Resource and Configuration Index and assign a new CSI.

3. . The system of claim 1, wherein, the PUCCH Resource Allocator is configured to:
determine a connection type, and
when establishing an RRM connection, after a handover into the cell, Handin, request or a RRC Connection and Reconfiguration for a secondary cell /carrier addition for carrier aggregation, CA, execute a PUCCH Overload Check; and
when not overloaded, assign the PUCCH Resource; or
when overloaded, determine if an SR or CSI periodicity or both are at a maximum, and if not, increase the SR or CSI periodicity or both to a configured higher value, and apply the change in periodicity to the UE to be reconfigured, and assign the PUCCH Resource; or
if the SR or CSI periodicity or both are at a maximum, determine if the cause for the establishment of the maximum is an emergency or high priority cause, and if not reject an Admission Request due to PUCCH overload, and if so, preempt one or more already connected UE s to free up and reassign PUCCH resource to the incoming UE.

4. . The system of claim 1 wherein the Incoming-Traffic Tracker is configured to estimate a call origination, a handover into the cell (HandIn), a carrier aggregation, and a carrier addition for the incoming traffic rate.

5. . The system of claim 1, wherein the BS is configured to determine the overloaded or underloaded condition by:
obtaining, at the RRM, a retrieve rate of incoming RRC establishment requests, Ra, the Ra being a number of RRC connection requests per second;
determine a retrieve rate of RRC connection reconfiguration requests (Rca), the Rca being a retrieve rate of the RRC connection reconfiguration requests per second for the secondary cell /carrier addition for CA;
determine a retrieve rate of RRC Connection release requests, Rr, the Rr being a number of RRC connection release requests per second; and
determine a retrieve rate for Handns, Rh, the Rh being a number of RRC connection reconfiguration complete requests per second;
and determine and set an PUCCH overload or PUCCH underload status.

6. . The system of claim 5, wherein the BS is configured to:
release PUCCH resources allocated to an incoming UE;
perform a PUCCH underload check;
determine a PUCCH underload status; and
when the PUCCH is not underloaded, end the PUCCH underload check; or
when the PUCCH is underloaded, determine if the SR or CSI periodicity or both are at a minimum, and if so, end the PUCCH underload check, or if not, lower the SR or CSI periodicity or both.

7. . The system of claim 6, wherein the BS is configured to determine the underload condition by an algorithm comprising:
CLs, CLc = current PUCCH resource or load of SR and CSI, respectively
LTs, LTc = a configured PUCCH Lower Threshold of SR and CSI, respectively $RLs = Ls * \left(Ra+Rca+Rh-Rr\right)$ $RLc = Lc * \left(Ra+Rca+Rh-Rr\right)$ where
RLs, RLc = a Total additional PUCCH load in a next second of the SR and the CSI, respectively
Ls, Lc = the PUCCH resource needed for the incoming UE of SR and CSI, respectively; where
if ( CLs + Ls + RLs < LTs ), set PUCCH SR Overload Status to Underloaded, otherwise, set PUCCH SR Overload Status to not Underloaded; and
if ( CLc + Lc + RLc < LTc ), set PUCCH CSI Overload Status to Underloaded, otherwise, set PUCCH CSI Overload Status to not Underloaded.

8. . The system according to claim 1, wherein the PUCCH Resource Allocator is configured to:
apply the increased or decreased SR or CSI periodicity, or both, to newly arriving UEs only.

9. . The system according to claim 1, wherein the PUCCH Resource Allocator is configured use a same SR and CSI resource assignment and periodicity for the already connected UEs for until the already connected UEs depart from the cell.

10. . The system according to claim 1, wherein, when the BS determines the SR or CSI periodicity, or both reach a maximum threshold and the BS determines that meeting of the maximum threshold is the overloaded condition, the BS is configured send an RRC connection reconfiguration to reallocate the existing UE's already in the cell with a smallest SR or CSI periodicity or both to a maximum SR or CSI periodicity or both.

11. . The system of claim 5, wherein the BS is configured to determine the overload condition by an algorithm comprising:
CLs, CLc = a current PUCCH resource or load of the SR and the CSI, respectively
UTs, UTc = a configured PUCCH Upper Threshold of the SR and the CSI, respectively $RLs = Ls * \left(Ra+Rca+Rh-Rr\right)$ $RLc = Lc * \left(Ra+Rca+Rh-Rr\right)$ where
RLs, RLc = a Total additional PUCCH load in a next second of the SR and the CSI, respectively
Ls, Lc = the PUCCH resource needed for the UE of SR and CSI, respectively; where
if ( CLs + Ls + RLs > UTs ), set a PUCCH SR Overload Status to overloaded, otherwise, set the PUCCH SR Overload Status to not overloaded; and
if ( CLc + Lc + RLc > UTc ) set PUCCH SR Overload Status to overloaded, otherwise, set PUCCH SR Overload Status to not overloaded.

12. . The system of claim 1, wherein when the BS determines the PUCCH Status is overloaded and SR or CSI or both are at a maximum periodicity, the BS is configured to send an RRC reconfiguration to the UEs that have been assigned a smaller SR periodicity than a current UE to set the UEs the smaller SR or CSI periodicity or both to a current value.

13. . The system of claim 12, wherein the BS is configured to incrementally assign a next current value to the next of the UEs having the smallest SR or CSI periodicity or both.

14. . The system of claim 1, wherein the BS is configured not to send an RRC Reconfiguration to all UEs in the cell; and the BS is configured to send the RRC Reconfiguration to specific UEs to reallocate PUCCH resources.

## Patentansprüche

1. System, das aufweist:
eine Basisstation, BS, die aufweist einen Tracker für eingehenden Verkehr, der so ausgebildet ist, dass er eine Rate von eingehendem Verkehr von eingehenden UEs, die in eine Zelle eintreten, berechnet; einen Physical-Uplink-Control-Channel-, PUCCH, Ressourcenzuteiler, der so ausgebildet ist, dass er PUCCH-Ressourcen, einschließlich einer festen Anzahl von PUCCH-Physical-Resource-Blocks, PRBs, einem mit der Radio Resource Control, RRC, verbundenen UE in einem Funkzugangsnetzwerk zuteilt, wobei die PUCCH-Ressourcen eine Scheduling-Anfrage, SR, und Kanalzustandsinformationen, CSI, umfassen, und wobei der PUCCH-Ressourcenzuteiler so ausgebildet ist, dass er die SR und die CSI den eingehenden UEs zuteilt und die SR- und CSI-Periodizitäten für die eingehenden UEs festlegt,
wobei die Basisstation so ausgebildet ist, dass sie die Rate von eingehendem Verkehr und die Anzahl der bereits in der Zelle befindlichen UEs verwendet, um zu bestimmen, ob der PUCCH-Ressourcenzuteiler eine SR- oder CSI-Kapazität erhöhen muss, wenn er sich in einem Überlastzustand befindet, oder die SR- oder CSI-Kapazität oder beides verringern muss, wenn er sich in einem Unterlastzustand befindet; und wobei der PUCCH-Ressourcenzuteiler ferner für Folgendes ausgebildet ist:
wenn eine Erhöhung erforderlich ist, Erhöhen der SR- oder CSI-Periodizität oder beider; und
wenn eine Verringerung erforderlich ist, Verringern der SR- oder CSI-Periodizität oder beider.

2. System nach Anspruch 1, wobei die BS für Folgendes ausgebildet ist:
Bestimmen eines Verbindungstyps, und
wenn es sich bei dem Verbindungstyp um die Wiederherstellung einer RRC-Verbindung handelt, Neuzuteilen eines gleichen SR- und CSI-Ressourcen- und -Konfigurationsindex; oder
wenn es sich bei dem Verbindungstyp um eine RRC-Verbindung und -Neukonfiguration für einen sekundären Träger handelt, Neuzuteilen eines gleichen SR-CSI-Ressourcen- und -Konfigurationsindex und Neuzuteilen einer neuen CSI.

3. System nach Anspruch 1, wobei der PUCCH-Ressourcenzuteiler für Folgendes ausgebildet ist:
Bestimmen eines Verbindungstyps, und
beim Herstellen einer RRM-Verbindung nach einem Handover in die Zelle, einem Handin, einer Anfrage oder einer RRC-Verbindungs- und Neukonfiguration für eine Sekundärzellen-/Trägeraddition für die Trägeraggregation, CA, Ausführen einer PUCCH-Überlastprüfung; und
wenn nicht überlastet, Zuteilen der PUCCH-Ressource; oder
wenn überlastet, Bestimmen, ob eine SR- oder CSI-Periodizität oder beide ein Maximum erreicht haben, und falls nicht, Erhöhen der SR- oder CSI-Periodizität oder beider auf einen konfigurierten höheren Wert, und Anwenden der Änderung der Periodizität auf das neu zu konfigurierende UE, und Zuteilen der PUCCH-Ressource; oder
wenn die SR- oder CSI-Periodizität oder beide ein Maximum erreicht haben, Bestimmen, ob die Ursache für das Erreichen des Maximums ein Notfall oder ein Grund mit hoher Priorität ist, und wenn dies nicht der Fall, Ablehnen einer Zulassungsanfrage aufgrund einer PUCCH-Überlast, und wenn dies hingegen der Fall ist, Vorbelegen eines oder mehrerer bereits verbundener UEs, um die PUCCH-Ressource freizugeben und dem eingehenden UE neu zuzuteilen.

4. System nach Anspruch 1, wobei der Tracker für eingehenden Verkehr so ausgebildet ist, dass er einen Anrufursprung, ein Handover in die Zelle (Handin), eine Trägeraggregation und eine Trägeraddition für die Rate des eingehenden Verkehrs schätzt.

5. System nach Anspruch 1, wobei die BS dazu ausgebildet ist, den Überlast- oder Unterlastzustand wie folgt zu ermitteln:
Erhalten, an der RRM, einer Abrufrate für eingehende RRC-Aufbauanfragen, Ra, wobei Ra eine Anzahl der RRC-Verbindungsanfragen pro Sekunde ist;
Bestimmen einer Abrufrate der RRC-Verbindungsneukonfigurationsanfragen (Rca), wobei Rca eine Abrufrate der RRC-Verbindungsneukonfigurationsanfragen pro Sekunde für die Sekundärzellen-/Trägeraddition für CA ist;
Bestimmen einer Abrufrate von RRC-Verbindungsabbauanfragen, Rr, wobei Rr eine Anzahl von RRC-Verbindungsabbauanfragen pro Sekunde ist; und
Bestimmen einer Abrufrate für Handins, Rh, wobei Rh eine Anzahl der RRC-Verbindungsneukonfigurations-Abschlussanfragen pro Sekunde ist;
und Bestimmen und Festlegen eines PUCCH-Überlast- oder PUCCH-Unterlastzustands.

6. System nach Anspruch 5, wobei die BS für Folgendes ausgebildet ist:
Freigeben der einem eingehenden UE zugeteilten PUCCH-Ressourcen;
Durchführen einer PUCCH-Unterlastprüfung;
Bestimmen eines PUCCH-Unterlastzustands; und
wenn der PUCCH nicht unterlastet ist, Beenden der PUCCH-Unterlastprüfung; oder
wenn der PUCCH unterlastet ist, Bestimmen, ob die SR- oder CSI-Periodizität oder beide ein Minimum erreicht haben, und wenn dies der Fall ist, Beenden der PUCCH-Unterlastprüfung, oder wenn dies nicht der Fall, Verringern der SR- oder CSI-Periodizität oder beider.

7. System nach Anspruch 6, wobei die BS dazu ausgebildet ist, den Unterlastzustand anhand eines Algorithmus zu bestimmen, der aufweist:
CLs, CLc = eine aktuelle PUCCH-Ressource oder -Last der SR bzw. CSI
LTs, LTc = eine konfigurierte untere PUCCH-Schwelle der SR bzw. CSI $RLs = Ls * \left(Ra+Rca+Rh-Rr\right)$ $RLc = Lc * \left(Ra+Rca+Rh-Rr\right)$
wobei
RLs, RLc = eine gesamte zusätzliche PUCCH-Last in der jeweils folgenden Sekunde der SR bzw. CSI
Ls, Lc = die für das eingehende UE benötigte PUCCH-Ressource von SR bzw. CSI; wobei wenn (CLs + Ls + RLs < LTs), Festlegen eines PUCCH-SR-Überlastzustands auf "unterlastet", andernfalls Festlegen des PUCCH-SR-Überlastzustands auf "nicht unterlastet"; und
wenn (CLc + Lc + RLc < LTc), Festlegen des PUCCH-CSI-Überlastzustands auf "unterlastet", andernfalls Festlegen des PUCCH-CSI-Überlastzustands auf "nicht unterlastet".

8. System nach Anspruch 1, wobei der PUCCH-Ressourcenzuteiler für Folgendes ausgebildet ist:
Anwenden der erhöhten oder verringerten SR- oder CSI-Periodizität oder beider nur auf neu eingehende UEs.

9. System nach Anspruch 1, wobei der PUCCH-Ressourcenzuteiler so ausgebildet ist, dass er für die bereits verbundenen UEs die gleiche SR- und CSI-Ressourcenzuteilung und - Periodizität verwendet, bis die bereits verbundenen UEs die Zelle verlassen.

10. System nach Anspruch 1, wobei, wenn die BS feststellt, dass die SR- oder CSI-Periodizität oder beide ein Maximum erreichen, und die BS feststellt, dass das Erreichen des maximalen Schwellenwerts den Überlastzustand darstellt, die BS so ausgebildet ist, dass sie eine RRC-Verbindungsneukonfiguration sendet, um die bereits in der Zelle befindlichen UEs mit einer kleinsten SR- oder CSI-Periodizität oder beidem einer maximalen SR- oder CSI-Periodizität oder beidem neu zuzuteilen.

11. System nach Anspruch 5, wobei die BS dazu ausgebildet ist, den Überlastzustand anhand eines Algorithmus zu bestimmen, der aufweist:
CLs, CLc = eine aktuelle PUCCH-Ressource oder -Last der SR bzw. CSI
UTs, UTc = eine konfigurierte obere PUCCH-Schwelle der SR bzw. CSI $RLs = Ls * \left(Ra+Rca+Rh-Rr\right)$ $RLc = Lc * \left(Ra+Rca+Rh-Rr\right)$
wobei
RLs, RLc = eine gesamte zusätzliche PUCCH-Last in der jeweils folgenden Sekunde der SR bzw. CSI
Ls, Lc = die für das UE benötigte PUCCH-Ressource von SR bzw. CSI; wobei wenn (CLs + Ls + RLs > UTs), Festlegen eines PUCCH-SR-Überlastzustands auf "überlastet", andernfalls Festlegen des PUCCH-SR-Überlastzustands auf "nicht überlastet"; und
wenn (CLc + Lc + RLc > UTc), Festlegen des PUCCH-SR-Überlastzustands auf "überlastet", andernfalls Festlegen des PUCCH-SR-Überlastzustands auf "nicht überlastet".

12. System nach Anspruch 1, wobei, wenn die BS feststellt, dass der PUCCH-Zustand überlastet ist und SR oder CSI oder beide eine maximale Periodizität aufweisen, die BS so ausgebildet ist, dass sie eine RRC-Neukonfiguration an die UEs sendet, denen eine geringere SR-Periodizität zugeteilt wurde als einem aktuellen UE, um für diese UEs die geringere SR- oder CSI-Periodizität oder beide auf den aktuellen Wert festzulegen.

13. System nach Anspruch 12, wobei die Basisstation so ausgebildet ist, dass sie dem nächsten der UEs, das die geringste SR- oder CSI-Periodizität oder beide aufweist, schrittweise einen nächsten aktuellen Wert zuteilt.

14. System nach Anspruch 1, wobei die BS so ausgebildet ist, dass sie keine RRC-Neukonfiguration an alle UEs in der Zelle sendet; und wobei die BS so ausgebildet ist, dass sie die RRC-Neukonfiguration an bestimmte UEs sendet, um PUCCH-Ressourcen neu zuzuteilen.

## Revendications

1. Système, comprenant :
une station de base, dite BS, comprenant un suiveur de trafic entrant configuré pour calculer un taux de trafic entrant d'UE entrants entrant dans une cellule ;
un dispositif d'attribution de ressources de canal physique de commande de liaison montante, dit PUCCH, configuré pour attribuer des ressources de PUCCH comprenant un nombre fixe de blocs de ressources physiques, dits PRB, de PUCCH à un UE connecté de commande de ressources radio, dite RRC, dans un réseau d'accès radio, dans lequel les ressources de PUCCH comprennent une demande de planification, dite SR, et des informations d'état de canal, dites CSI, et dans lequel le dispositif d'attribution de ressources de PUCCH est configuré pour attribuer la SR et les CSI aux UE entrants et pour définir des périodicités de la SR et des CSI des UE entrants,
dans lequel la BS est configurée pour utiliser le taux de trafic entrant et un nombre d'UE existants déjà présents dans la cellule pour déterminer s'il est nécessaire que le dispositif d'attribution de ressources de PUCCH augmente une capacité de SR ou de CSI lorsqu'il est dans une condition de surcharge ou diminue la capacité de SR ou de CSI, ou des deux, lorsqu'il est dans une condition de sous-charge ; et le dispositif d'attribution de ressources de PUCCH est en outre configuré pour :
lorsqu'une augmentation est nécessaire, augmenter la périodicité de la SR ou des CSI, ou des deux ; et
lorsqu'une diminution est nécessaire, diminuer la périodicité de la SR ou des CSI, ou des deux.

2. Système selon la revendication 1, dans lequel, la BS est configurée pour :
déterminer un type de connexion, et
lorsque le type de connexion est un rétablissement d'une connexion de RRC, réattribuer un même index de ressources et de configuration de SR et de CSI ; ou
lorsque le type de connexion est une connexion et une reconfiguration de RRC d'une porteuse secondaire, réattribuer un même index de ressources et de configuration de SR et de CSI et attribuer de nouvelles CSI.

3. Système selon la revendication 1, dans lequel le dispositif d'attribution de ressources de PUCCH est configuré pour :
déterminer un type de connexion, et
lors de l'établissement d'une connexion de RRM, après une demande de transfert intercellulaire dans la cellule, dite Handin, ou une connexion et une reconfiguration de RRC à des fins d'addition de cellule secondaire/porteuse d'agrégation de porteuses, dite CA, exécuter une vérification de surcharge de PUCCH ; et
en absence de surcharge, attribuer la ressource de PUCCH ; ou
en absence de surcharge, déterminer si une périodicité de SR ou de CSI, ou des deux, est à un maximum, et si ce n'est pas le cas, augmenter la périodicité de SR ou de CSI, ou des deux, à une valeur plus haute configurée, et appliquer la modification de périodicité à l'UE à reconfigurer, et attribuer la ressource de PUCCH ; ou
si la périodicité de SR ou de CSI, ou des deux, est à un maximum, déterminer si la cause de l'établissement du maximum est une cause d'urgence ou de haute priorité, et si ce n'est pas le cas, rejeter une demande d'admission due à une surcharge de PUCCH, et si c'est le cas, préempter un ou plusieurs UE déjà connectés pour libérer et réattribuer une ressource de PUCCH à l'UE entrant.

4. Système selon la revendication 1, dans lequel le suiveur de trafic entrant est configuré pour estimer une origine d'appel, un transfert intercellulaire dans la cellule (HandIn), une agrégation de porteuses et une addition de porteuse pour le taux de trafic entrant.

5. Système selon la revendication 1, dans lequel la BS est configurée pour déterminer la condition de surcharge ou de sous-charge en exécutant les étapes consistant à :
obtenir, au niveau du RRM, un taux de récupération de demandes d'établissement de RRC entrantes, dit Ra, le Ra correspondant à un nombre de demandes de connexion de RRC par seconde ;
déterminer un taux de récupération de demandes de reconfiguration de connexion de RRC (Rca), le Rca correspondant à un taux de récupération des demandes de reconfiguration de connexion de RRC par seconde à des fins d'addition de cellule secondaire/porteuse de CA ;
déterminer un taux de récupération de demandes de libération de connexion de RRC, dit Rr, le Rr correspondant à un nombre de demandes de libération de connexion de RRC par seconde ; et
déterminer un taux de récupération de Handn, dit Rh, le Rh correspondant à un nombre de demandes complètes de reconfiguration de connexion de RRC par seconde ;
et déterminer et définir un état de surcharge de PUCCH ou un état de sous-charge de PUCCH.

6. Système selon la revendication 5, dans lequel la BS est configurée pour :
libérer des ressources de PUCCH attribuées à un UE entrant ;
effectuer une vérification de sous-charge de PUCCH ;
déterminer un état de sous-charge de PUCCH ; et
lorsque le PUCCH n'est pas en sous-charge, mettre fin à la vérification de sous-charge de PUCCH ; ou
lorsque le PUCCH est en sous-charge, déterminer si la périodicité de la SR ou des CSI, ou des deux, est à un minimum, et si c'est le cas, mettre fin à la vérification de sous-charge de PUCCH, ou si ce n'est pas le cas, diminuer la périodicité de la SR ou des CSI, ou des deux.

7. Système selon la revendication 6, dans lequel la BS est configurée pour déterminer la condition de sous-charge par un algorithme comprenant :
CLs, CLc = ressource ou charge de PUCCH courante, respectivement, de SR et de CSI
LTs, LTc = un seuil plus bas de PUCCH configuré, respectivement, de SR et de CSI $RLs = Ls * \left(Ra+Rca+Rh-Rr\right)$ $RLc = Lc * \left(Ra+Rca+Rh-Rr\right)$ où
RLs, RLc = une charge de PUCCH additionnelle totale sur une seconde suivante, respectivement, de la SR et des CSI
Ls, Lc = la ressource de PUCCH nécessaire pour l'UE entrant, respectivement, de SR et de CSI ; où
si (CLs + Ls + RLs < LTs), définir un état de surcharge de SR de PUCCH à en sous-charge, autrement, définir un état de surcharge de SR de PUCCH à pas en sous-charge ; et
si (CLc + Lc + RLc < LTc), définir un état de surcharge de CSI de PUCCH à en sous-charge, autrement, définir un état de surcharge de CSI de PUCCH à pas en sous-charge.

8. Système selon la revendication 1, dans lequel le dispositif d'attribution de ressources de PUCCH est configuré pour :
appliquer la périodicité de SR ou de CSI, ou des deux, augmentée ou diminuée, uniquement à des UE entrant nouvellement.

9. Système selon la revendication 1, dans lequel le dispositif d'attribution de ressources de PUCCH est configuré pour utiliser une même attribution et une même périodicité de ressources de SR et de CSI pour des UE déjà connectés jusqu'à ce que les UE déjà connectés quittent la cellule.

10. Système selon la revendication 1, dans lequel, lorsque la BS détermine que la périodicité de SR ou de CSI, ou des deux, atteint un seuil maximal et que la BS détermine que la satisfaction du seuil maximal est la condition de surcharge, la BS est configurée pour envoyer une reconfiguration de connexion de RRC de façon à réattribuer, à l'UE existant déjà présent dans la cellule, une périodicité de SR ou de CSI, ou des deux, la plus petite, à une périodicité de SR ou de CSI, ou des deux, maximale.

11. Système selon la revendication 5, dans lequel la BS est configurée pour déterminer la condition de surcharge par un algorithme comprenant :
CLs, CLc = ressource ou charge de PUCCH courante, respectivement, de la SR et des CSI
UTs, UTc = un seuil plus haut de PUCCH configuré, respectivement, de la SR et des CSI $RLs = Ls * \left(Ra+Rca+Rh-Rr\right)$ $RLc = Lc * \left(Ra+Rca+Rh-Rr\right)$ où
RLs, RLc = une charge de PUCCH additionnelle totale sur une seconde suivante, respectivement, de la SR et des CSI ;
Ls, Lc = la ressource de PUCCH nécessaire pour l'UE, respectivement, de SR et de CSI ;
où
si (CLs + Ls + RLs > UTs), définir un état de surcharge de SR de PUCCH à en surcharge, autrement, définir un état de surcharge de SR de PUCCH à pas en surcharge ; et
si (CLc + Lc + RLc > UTc), définir un état de surcharge de SR de PUCCH à en surcharge, autrement, définir un état de surcharge de SR de PUCCH à pas en surcharge.

12. Système selon la revendication 1, dans lequel, lorsque la BS détermine que l'état de PUCCH est en surcharge et que la SR ou les CSI, ou les deux, sont à une périodicité maximale, la BS est configurée pour envoyer une reconfiguration de RRC aux UE qui ont fait l'objet d'une attribution d'une périodicité de SR plus petite que celle d'un UE courant pour définir la périodicité de SR ou de CSI, ou des deux, plus petite d'UE à une valeur courante.

13. Système selon la revendication 12, dans lequel la BS est configurée pour attribuer de manière incrémentielle une valeur courante suivante à l'UE suivant des UE ayant la périodicité de SR ou de CSI, ou des deux, la plus petite.

14. Système selon la revendication 1, dans lequel la BS est configurée pour ne pas envoyer de reconfiguration de RRC à tous les UE de la cellule ; et la BS est configurée pour envoyer la reconfiguration de RRC à des UE spécifiques pour réattribuer des ressources de PUCCH.
